# EUROPÄISCHE PATENTANMELDUNG

(11) **EP 3 514 771 A1**
(43) Veröffentlichungstag der Anmeldung: **24.07.2019**
(21) Anmeldenummer: 19152977.5
(22) Anmeldetag: 22.01.2019
(51) Int. Cl.: G07F 13/02, G07F 15/04, B67D 7/04, G06Q 20/32

(54) **VERFAHREN ZUM BETREIBEN EINES TANKSTELLENSYSTEMS**

(30) Priorität: 23.01.2018 DE 102018101414
(71) Anmelder: Scheidt & Bachmann GmbH, 41238 Mönchengladbach (DE)
(72) Erfinder: Janssen, Michael, 41065 Mönchengladbach (DE); Löffler, Stephan, 41468 Neuss (DE)
(74) Vertreter: Cohausz & Florack

(57) **Zusammenfassung**

Die Anmeldung betrifft ein Verfahren zum Betreiben eines Tankstellensystems (100, 200, 500) mit mindestens einer Tankstelle (234, 534), wobei die Tankstelle (234, 534) eine Mehrzahl von Zapfpunkten (236.1, 236.2, 236.3, 236.4, 536.1, 536.2) aufweist, umfassend Empfangen, durch eine Auswerteanordnung (102, 202), von einem mobilen Endgerät (252) des Nutzers, mindestens eines ersten Datensatzes (116), der zumindest eine Nutzerkennung (118) des Nutzers des mobilen Endgeräts (252) und mindestens eine Tankstellenkennung (120) der Tankstelle (234, 534) umfasst, Empfangen, durch die Auswerteanordnung (102, 202), von einer optischen Erfassungseinrichtung (240) der Tankstelle (234, 534), mindestens eines zweiten Datensatzes (122), der mindestens eine Positionsinformation (126) eines in mindestens einem Abstellbereich (233, 533) der Tankstelle (234, 534) durch die optische Erfassungseinrichtung (240) erfassten Fahrzeugs (248.1, 248.2, 548) und mindestens eine Fahrzeugkennungsinformation (124) des durch die optische Erfassungseinrichtung (240) erfassten Fahrzeugs (248.1, 248.2, 548) umfasst, und Auswerten, durch die Auswerteanordnung (102, 202), in einem Auswertevorgang, des empfangenen ersten Datensatzes (116) und des empfangenen zweiten Datensatzes (122) derart, dass der von dem Nutzer des erfassten Fahrzeugs (248.1, 248.2, 548) zu verwendende Zapfpunkt (236.1, 236.2, 236.3, 236.4, 536.1, 536.2) aus der Mehrzahl von Zapfpunkten (236.1, 236.2, 236.3, 236.4, 536.1, 536.2) der Tankstelle (234, 534) bestimmt wird.

## Beschreibung

Die Anmeldung betrifft ein Verfahren zum Betreiben eines Tankstellensystems mit mindestens einer Tankstelle, wobei die Tankstelle eine Mehrzahl von Zapfpunkten aufweist. Darüber hinaus betrifft die Anmeldung ein Tankstellensystem und eine Auswerteanordnung.

Bekannte Tankstellensysteme weisen mindestens eine Tankstelle auf. Eine Tankstelle weist in der Regel eine Mehrzahl von Zapfpunkten auf. Ferner weist eine Tankstelle mindestens einen Abstellbereich auf. Ein Nutzer kann sein zu tankendes Fahrzeug in dem Abstellbereich abstellen, um einen Zapfpunkt zum Tanken zu verwenden. Nach dem Tanken bzw. dem Tankvorgang bezahlt der Nutzer an einer Abrechnungseinrichtung bzw. einem Zahlpunkt (z.B. Kasse innerhalb eines Tankstellengebäudes) der Tankstelle unter Angabe der Zapfpunktkennung (so genannte Zapfpunktnummer) den Preis für den getankten Kraftstoff. Umgangssprachlich wird die Zapfpunktnummer auch "Säulennummer" genannt, was jedoch nicht korrekt ist, da eine Zapfsäule mehrere Zapfpunkte aufweisen kann.

Um den Tankvorgang nutzerfreundlicher zu gestalten, sind Verfahren zum Betreiben von Tankstellensystemen, die eine oder mehrere Tankstellen umfassen, bekannt, bei denen ein dem Nutzer zugeordnetes mobiles Endgerät verwendet wird. Ein solches Verfahren wird beispielsweise in dem Dokument US 9 076 139 B2 beschrieben. Bei derartigen Verfahren verfügen die Tankstellensysteme über mindestens eine Auswerteanordnung, die insbesondere mindestens ein Auswertemodul in Form eines Servers umfassen kann, um beispielsweise einen durchgeführten Tankvorgang auszuwerten und abzurechnen.

Hierzu wird der für den Tankvorgang zu verwendende Zapfpunkt (bzw. die Zapfpunktkennung dieses Zapfpunkts) nur durch eine Interaktion des Nutzers mit seinem mobilen Endgerät bestimmt, wie nachfolgend ausgeführt wird: Nachdem der Nutzer sein zu tankendes Fahrzeug vor einem Zapfpunkt abgestellt hat, aktiviert er eine auf dem mobilen Endgerät installierte Tankanwendung. Dann identifiziert der Nutzer den Zapfpunkt, beispielsweise durch ein Erfassen eines an dem Zapfpunkt angeordneten optischen Codes (z.B. QR-Code) mittels des mobilen Endgeräts und der darauf installierten Tankanwendung. Zumindest basierend auf diesen Daten kann die Auswerteanordnung den vom Nutzer identifizierten Zapfpunkt für einen Tankvorgang freigeben und/oder einen Abrechnungsvorgang durchführen.

Derartige Verfahren und Tankstellensysteme erfordern jedoch eine erhebliche manuelle Interaktion des Nutzers (z.B. Aktivieren der installierten Anwendung, Einlesen einer Zapfpunktkennung mit Hilfe des mobilen Endgeräts, Kommunizieren mit der Auswerteanordnung etc.), so dass nur eine geringe Nutzerfreundlichkeit gegeben ist.

Zudem ist die Fehler- und Manipulationssicherheit bei derartigen Verfahren gering, da die Identifizierung des Zapfpunktes ausschließlich durch das mobile Endgerät durchgeführt wird, welches dem Nutzer zugeordnet ist. So kann/können das mobile Endgerät, die an einem Zapfpunkt angebrachten Zapfpunktkennung (z.B. optischer Code) und/oder die auf dem mobilen Endgerät installierte Tankanwendung manipuliert werden. Durch eine derartige Manipulation können Zapfpunkte missbräuchlich abgerechnet werden mit Nutzern, die dort gar nicht getankt haben. Auch kann die Ursache für eine fehlerhafte Abrechnung ein Nutzerfehler bei der Identifizierung des Zapfpunktes sein.

Daher liegt der Anmeldung die Aufgabe zugrunde, ein Verfahren zum Betreiben eines Tankstellensystems bereitzustellen, welches die Nutzerfreundlichkeit verbessert und insbesondere einen verbesserten Schutz gegenüber Manipulationen des Freigabe-, Tank- und/oder Abrechnungsvorgangs ermöglicht.

Die Aufgabe wird gemäß einem ersten Aspekt der Anmeldung durch ein Verfahren zum Betreiben eines Tankstellensystems nach Anspruch 1 gelöst. Das Tankstellensystem umfasst mindestens eine Tankstelle. Die Tankstelle weist eine Mehrzahl von Zapfpunkten auf. Das Verfahren umfasst:
- Empfangen, durch eine Auswerteanordnung, von einem mobilen Endgerät des Nutzers, mindestens eines ersten Datensatzes, der zumindest eine Nutzerkennung des Nutzers des mobilen Endgeräts und mindestens eine Tankstellenkennung der Tankstelle umfasst,
- Empfangen, durch die Auswerteanordnung, von einer optischen Erfassungseinrichtung der Tankstelle, mindestens eines zweiten Datensatzes, der mindestens eine Positionsinformation eines in mindestens einem Abstellbereich der Tankstelle durch die optische Erfassungseinrichtung erfassten Fahrzeugs und mindestens eine Fahrzeugkennungsinformation des durch die optische Erfassungseinrichtung erfassten Fahrzeugs umfasst, und
- Auswerten, durch die Auswerteanordnung, in einem Auswertevorgang, des empfangenen ersten Datensatzes und des empfangenen zweiten Datensatzes derart, dass der von dem Nutzer des erfassten Fahrzeugs zu verwendende Zapfpunkt aus der Mehrzahl von Zapfpunkten der Tankstelle bestimmt wird.

Indem im Gegensatz zum Stand der Technik neben dem mobilen Endgerät eine zweite Datenquelle zur Bestimmung des Zapfpunkts herangezogen wird, nämlich in Form einer optischen Erfassungseinrichtung der Tankstelle, werden die erforderlichen manuellen Interaktionsschritte des Nutzers minimiert. Zudem wird für die Bestimmung des zu verwendenden Zapfpunktes die Fehler- und Manipulationssicherheit erhöht aufgrund der Nutzung zweier Datenquellen. Insbesondere, da die optische Erfassungseinrichtung vollkommen unabhängig von jeder Nutzerinteraktion arbeitet, ist das Risiko einer fehlerhaften oder manipulierten Zapfpunktzuordnung deutlich verringert.

Das anmeldungsgemäße Verfahren wird zum Betreiben eines Tankstellensystems verwendet. Das Tankstellensystem kann eine oder vorzugsweise mehrere Tankstelle/en umfassen. Unter einer Tankstelle ist anmeldungsgemäß insbesondere eine Tankstelle zu verstehen, die mindestens eine Kraftstoffart, vorzugsweise eine Vielzahl von Kraftstoffarten, für die Betankung von Fahrzeugen bereitstellt. Die wenigstens eine Tankstelle kann wenigstens eine Tankvorrichtung umfassen. Unter einer Tankvorrichtung ist insbesondere eine Zapfsäule zu verstehen, die mindestens eine Kraftstoffart für die Betankung von Fahrzeugen bereitstellt. Die Tankvorrichtung umfasst mindestens einen Zapfpunkt. Unter einem Zapfpunkt ist vorliegend insbesondere eine Benutzerschnittstelle der Tankvorrichtung zu verstehen, mit der ein Fahrzeug von der Tankvorrichtung mit Kraftstoff versorgt werden kann.

Eine Tankstelle weist mindestens einen Abstellbereich auf. Ein Abstellbereich ist eine Parkfläche für zu betankende Fahrzeuge. Insbesondere ist eine Zapfsäule von einem Abstellbereich zumindest teilweise umgeben. Beispielsweise kann eine Zapfsäule bekannter Bauart so aufgebaut sein, dass sie an zwei Seiten einen Abstellbereich in Form von Abstellplätzen für zu tankende Fahrzeuge hat. Ferner kann eine derartige Zapfsäule beispielsweise an beiden Seiten jeweils mindestens eine Ausgabevorrichtung (Schlauch, Zapfpistole) für Kraftstoffe aufweisen. Mit anderen Worten verfügt damit eine derartige Zapfsäule über zwei Zapfpunkte, nämlich je einen Zapfpunkt für je einen Abstellplatz des Abstellbereichs. Insbesondere kann eine Tankvorrichtung an einem Zapfpunkt mindestens eine Kraftstoffart bereitstellen. Bei dem Kraftstoff kann es sich insbesondere um einen flüssigen oder gasförmigen Kraftstoff handeln, aber auch um elektrische Energie.

Ferner umfasst ein anmeldungsgemäßes Tankstellensystem mindestens eine Auswerteanordnung. Die Auswerteanordnung kann durch ein oder mehrere Auswertemodul/e in Form von einer bzw. mehrerer Recheneinrichtung/en (z.B. ein Server oder ein verteiltes Serversystem mit mehreren Servern) gebildet sein. Vorzugsweise kann die Auswerteanordnung zumindest teilweise entfernt von der Tankstelle angeordnet sein. So kann die Auswerteanordnung über mindestens ein Empfangsmodul verfügen, um Daten über mindestens einen Kommunikationskanal bzw. mindestens ein Kommunikationsnetz von entfernt angeordneten Sendern (z.B. mobiles Endgerät, optische Erfassungseinrichtung etc.) zu empfangen.

Das Verfahren umfasst das Empfangen, durch die Auswerteanordnung, mindestens eines ersten Datensatzes. Der erste Datensatz, der beispielsweise aus einem oder mehreren Datenpaket/en gebildet sein kann, umfasst mindestens eine Nutzerkennung eines Nutzers und mindestens eine Tankstellenkennung der Tankstelle. Der erste Datensatz kann insbesondere von einem mobilen Endgerät des Nutzers ausgesendet und durch die Auswerteanordnung empfangen werden. Eine Nutzerkennung kann insbesondere eineindeutig dem Nutzer des mobilen Endgeräts zumindest indirekt, vorzugsweise datenmäßig, zugeordnet sein. Dieser Nutzer ist insbesondere auch der Nutzer des zu tankenden Fahrzeugs. Beispielhafte und nicht abschließende Nutzerkennungen sind Nutzernamen, Rufnummer des mobilen Endgeräts, eine IMEI (International Mobile Station Equipment Identity)-Nummer des mobilen Endgeräts, eine MAC (Media-Access-Control)-Adresse des mobilen Endgeräts, eine Kreditkartennummer, eine SIM (Subscriber Identity Module) und/oder eine nach einer ersten Anmeldung anonymisierte Identifikationskennung, wie beispielweise ein Token.

Der erste Datensatz und damit die Nutzerkennung wird insbesondere durch das zuvor beschriebene Empfangsmodul der Auswerteanordnung über einen drahtlosen Kommunikationskanal (z.B. Mobilfunkdatennetz) empfangen. Beispielsweise kann das mobile Endgerät mindestens eine Nachricht mit einem ersten Datensatz aussenden, umfassend die Nutzerkennung und die Tankstellenkennung. Die Tankstellenkennung ist vorzugsweise ein eindeutiger Code und/oder eine eindeutige geographische Positionsangabe (z.B. GPS-Daten oder ähnliche Positionsdaten) der Tankstelle. Die Tankstellenkennung ist der Tankstelle systemweit insbesondere eineindeutig zugeordnet. Somit ist eine Tankstelle innerhalb des Tankstellensystems eindeutig durch die Tankstellenkennung datenmäßig identifizierbar.

Wie bereits beschrieben wurde, können Nutzerkennung und Tankstellenkennung gemeinsam an die Auswerteanordnung übertragen werden. Mit anderen Worten kann die Tankstellenkennung der Nutzerkennung zugeordnet sein bzw. mit dieser verknüpft sein. Die Auswerteanordnung kann also einen ersten Datensatz von dem mobilen Endgerät empfangen, der die Nutzerkennung und die Tankstellenkennung enthält. Vorzugsweise enthält dieser erste Datensatz weiterhin einen Zeitstempel, das heißt die Angabe von Datum und Uhrzeit der Erstellung des ersten Datensatzes. Im anmeldungsgemäßen Sinn geschieht die Übertragung des ersten Datensatzes vorzugsweise in Echtzeit. Unter Echtzeit ist hierbei zu verstehen, dass die Übertragung zumindest so wenig Zeit in Anspruch nimmt, dass das beschriebene Verfahren den Zeitablauf eines Tankvorgangs nicht (nennenswert) verzögert. Jedenfalls kann der Auswerteanordnung nach Empfang des ersten Datensatzes bekannt sein, dass sich ein bestimmter Nutzer zu einer bestimmten Zeit ("jetzt", seit wenigen Sekunden) an einer bestimmten Tankstelle befindet.

Vorzugsweise kann eine automatische Aussendung eines entsprechenden Datensatzes von dem mobilen Endgerät bei Erreichen der Tankstelle durchgeführt werden. Beispielsweise kann dies erfolgen abhängig von in einer Tankanwendung gespeicherten geographischen Positionsdaten (GPS-Koordinaten etc.) von Tankstellen und von durch das mobile Endgerät erfassten augenblicklichen Positionsdaten (GPS-Koordinaten etc.) des mobilen Endgeräts. Stellt das mobile Endgerät durch einen Abgleich zwischen diesen Daten fest, dass es sich an einer Tankstelle befindet, kann eine Aussendung erfolgen.

Die Aussendung kann auch von einer Auswertung eines Bewegungssensors des mobilen Endgeräts abhängen. Wird beispielsweise eine bestimmte Bewegungsgeschwindigkeit detektiert, kann eine Aussendung unterbleiben. Mit anderen Worten kann nur dann eine Aussendung bewirkt werden, wenn die erfasste Bewegungsgeschwindigkeit unter einem Grenzwert (z.B. < 10 km/h, < 5 km/h) liegt und/oder wenn das mobile Endgerät feststellt, dass es sich nicht mehr bewegt. Auch kann eine Aussendung durch eine manuelle Interaktion von dem Nutzer bewirkt werden.

Insbesondere sendet das mobile Endgerät (nur) dann einen ersten Datensatz, wenn sich der Nutzer bzw. das dem Nutzer zugeordnete mobile Endgerät zumindest in der Nähe der Tankstelle (z.B. im Umkreis von 200 m um die Tankstelle), vorzugsweise auf dem Gelände, insbesondere dem Abstellbereich, der Tankstelle, befindet.

Darüber hinaus empfängt die Auswerteanordnung mindestens einen zweiten Datensatz von einer optischen Erfassungseinrichtung der Tankstelle. Die zweiten Datensätze basieren insbesondere auf Bilddaten der optischen Erfassungseinrichtung der Tankstelle. Der zweite Datensatz umfasst zumindest eine Positionsinformation eines in einem Abstellbereich erfassten Fahrzeugs und eine Fahrzeugkennungsinformation des erfassten Fahrzeugs.

Die optische Erfassungseinrichtung kann insbesondere wenigstens eine Kamera umfassen, deren Bilderfassungsbereich vorzugsweise zumindest den Abstellbereich für Fahrzeuge an den Zapfpunkten abdeckt. Optische Erfassungseinrichtungen können "klassische" (Video-) Kamerasysteme sein, aber auch Lichtschranken, Time-of-Flight-Systeme, Stereokamerasystem oder Fotogrammetriesysteme umfassen. Ebenso sind aktive (z.B. triangulationsbasierte, konfokale oder spektralkodierte) optische Erfassungssysteme, wie 3D-Projektions- oder Reflexionssysteme auf Basis von Mustern, Gittern oder Streiflicht, als optische Erfassungseinrichtungen zu verstehen. Insbesondere falls der Abstellbereich sehr groß ist, kann die optische Erfassungseinrichtung mehrere Kameras mit unterschiedlichen Bilderfassungsbereichen umfassen, so dass vorzugsweise der gesamte Abstellbereich von der Gesamtheit aller Kameras erfasst wird. Beispielweise können ohnehin vorhandene Überwachungskameras der Tankstelle zumindest als Bestandteil der optischen Erfassungseinrichtung eingesetzt werden.

Unter einer Fahrzeugkennungsinformation ist vorliegend insbesondere eine datenmäßige Information zu verstehen, aus der eine Fahrzeugkennung, die insbesondere eineindeutig dem Fahrzeug zugeordnet ist, zumindest abgeleitet oder bestimmt werden kann. Beispielsweise kann die empfangene Fahrzeugkennungsinformation eine Fahrzeugkennung (z.B. Fahrzeugkennzeichen) oder Bilddaten sein, aus denen die Fahrzeugkennung (z.B. Fahrzeugkennzeichen) bestimmt werden kann.

In einer Ausführungsform kann die optische Erfassungseinrichtung zumindest teilweise die Auswerteanordnung in Form eines Bilddatenauswertemoduls umfassen. Das Bilddatenauswertemodul kann zum Erfassen einer Fahrzeugkennungsinformation in Form einer Fahrzeugkennung, insbesondere basierend auf den bereitgestellten Bilddaten bzw. Bilddatensatz, eingerichtet sein. Fahrzeugkennungen können Codes sein, die jeweils eindeutig einem Fahrzeug zugeordnet sind. Vorzugsweise kann ein Fahrzeugkennzeichen bzw. Nummernschild als Fahrzeugkennung erfasst werden. Alternativ kann ein Bilddatenauswertemodul in einer entfernt von der Tankstelle angeordneten Auswerteanordnung (z.B. Server) angeordnet sein.

Darüber hinaus umfasst der zweite Datensatz eine Positionsinformation eines in dem Abstellbereich erfassten Fahrzeugs. Unter einer Positionsinformation ist vorliegend insbesondere eine datenmäßige Information zu verstehen, aus der die Fahrzeugposition in Bezug zu der Mehrzahl von Zapfpunkten zumindest abgeleitet oder bestimmt werden kann. Beispielsweise kann die Positionsinformation eine Zapfpunktkennung des von diesem Fahrzeug bzw. dem Nutzer des Fahrzeugs zu verwendenden Zapfpunktes sein, oder die Positionsinformation kann Bilddaten sein, aus denen die Zapfpunktkennung des von diesem Fahrzeug bzw. dem Nutzer des Fahrzeugs zu verwendenden Zapfpunktes bestimmt werden kann.

Die Fahrzeugkennung kann von der optischen Erfassungseinrichtung über ein Sendemodul an die Auswerteanordnung gesendet werden. Mit anderen Worten empfängt die Auswerteanordnung von der optischen Erfassungseinrichtung der Tankstelle über einen drahtlosen und/oder drahtgebundenen Kanal als Fahrzeugkennungsinformation die Fahrzeugkennung eines erfassten Fahrzeugs, welches sich insbesondere in einem Abstellbereich der Tankstelle befindet. Alternativ ist unter einem Empfangen einer Fahrzeugkennung das Empfangen von Bilddaten zu verstehen. Bei dieser Ausführungsform kann die Funktionalität des Bilddatenauswertemoduls in der Auswerteanordnung implementiert sein.

Darüber hinaus empfängt die Auswerteanordnung von der optischen Erfassungseinrichtung der Tankstelle über einen drahtlosen und/oder drahtgebundenen Kanal eine Positionsinformation des erfassten Fahrzeugs. Eine anmeldungsgemäße Positionsinformation bzw. ein Positionsdatensatz enthält Positionsdaten des Fahrzeugs, insbesondere in Bezug zu der Mehrzahl von Zapfpunkten. Insbesondere ist die Positionsinformation eingerichtet bzw. geeignet, einen Zapfpunkt innerhalb der Tankstelle eindeutig zu identifizieren, der von dem Fahrzeug für einen Tankvorgang verwendet werden soll.

Unter dem zu verwendenden Zapfpunkt ist insbesondere der Zapfpunkt zu verstehen, der aufgrund der Abstellposition eines erfassten Fahrzeugs für eine Tankung (voraussichtlich) verwendet werden wird, beispielsweise aufgrund der geringsten Entfernung zwischen Fahrzeug und Zapfpunkt. Dieser zu verwendende Zapfpunkt ist dem erfassten Fahrzeug, identifiziert durch seine Fahrzeugkennung, zugeordnet. Eine Positionsinformation kann insbesondere Positionsdaten umfassen. Derartige Positionsdaten können anmeldungsgemäß Ortsangaben der erfassten Fahrzeuge in Bezug auf die Zapfpunkte einer Tankstelle sein. Positionsdaten können insbesondere jeweils genau einem Fahrzeug zugeordnet sein. Positionsdaten können zu einem Fahrzeug genau einen bestimmten (voraussichtlich verwendeten) Zapfpunkt umfassen. Wie bereits beschrieben wurde, können alternativ Positionsdaten auch Daten enthalten, aus denen z.B. ein Auswertemodul der Auswerteanordnung zu dem jeweiligen Fahrzeug genau einen (voraussichtlich zu verwendenden) Zapfpunkt bestimmen kann. Dies können beispielweise Angaben zu Teilbereichen des Abstellbereichs der Tankstelle sein, auf denen das Fahrzeug abgestellt ist.

Wie bereits beschrieben wurde, kann als zweiter Datensatz ein (verarbeiteter) zweiter Datensatz empfangen werden, der als Fahrzeugkennungsinformation eine Fahrzeugkennung und als Positionsinformation eine Zapfpunktkennung umfasst, oder als zweiter Datensatz ein (unverarbeiteter) zweiter Datensatz, der Bilddaten umfasst, aus denen die Fahrzeugkennung und die Zapfpunktkennung bestimmt werden können. Es versteht sich, dass auch eine Kombination möglich ist.

Beispielsweise kann das zuvor beschriebene Bilddatenauswertemodul eingerichtet sein zum Erfassen von Fahrzeugpositionsinformationen, insbesondere zum Bestimmen von Fahrzeugpositionen in Bezug zu der Mehrzahl von Zapfpunkten und zum Bestimmen genau eines von einem erfassten Fahrzeug (wahrscheinlich) zu verwendenden Zapfpunkts.

Zudem kann ein zweiter Datensatz weitere Daten umfassen. Vorzugsweise kann ein zweiter Datensatz eine Tankstellenkennung und/oder einen Zeitstempel, also Datum und Uhrzeit der Erstellung des zweiten Datensatzes, umfassen.

Das Empfangen der zweiten Datensätze von der optischen Erfassungseinrichtung durch die Auswerteanordnung kann periodisch erfolgen. Die Zeitabstände zwischen aufeinanderfolgenden zweiten Datensätzen können so gewählt werden, dass auch ein kurzer Tankvorgang sicher in wenigstens einem zweiten Datensatz enthalten ist. Typische Zeitabstände können bei rund 30 Sekunden liegen.

Alternativ oder zusätzlich kann das Empfangen des zweiten Datensatzes von der optischen Erfassungseinrichtung durch die Auswerteanordnung durch eine Anfrage der Auswerteanordnung ausgelöst werden: Sobald die Auswerteanordnung einen ersten Datensatz von einem mobilen Endgerät empfängt, kann sie einen Anfragedatensatz an die optische Erfassungseinrichtung der zu dem ersten Datensatz gehörigen Tankstelle aussenden. Damit kann das Erstellen und Senden wenigstens eines zweiten Datensatzes (oder einer Folge von zweiten Datensätzen) ausgelöst werden.

Weiter alternativ oder zusätzlich kann das Empfangen des zweiten Datensatzes von der optischen Erfassungseinrichtung durch die Auswerteanordnung durch die optische Erfassungseinrichtung selbst bewirkt werden. Insbesondere umfasst dies das Auslösen des Aussendens eines zweiten Datensatzes durch die optische Erfassungseinrichtung. Dies kann beispielsweise dann realisiert werden, wenn das Tankstellensystem gemäß der oben erwähnten Ausführungsform über eine optische Erfassungseinrichtung mit einem Bilddatenauswertmodul verfügt: Sobald das Bilddatenauswertemodul ein neues Fahrzeug an der Tankstelle erkennt, kann es einen entsprechend verarbeiteten zweiten Datensatz generieren und dessen Aussendung an die Auswerteanordnung auslösen.

Zweite Datensätze können von der optischen Erfassungseinrichtung über ein Sendemodul an die Auswerteanordnung gesendet werden. Mit anderen Worten empfängt die Auswerteanordnung von der optischen Erfassungseinrichtung der Tankstelle über einen drahtlosen und/oder drahtgebundenen Datenkanal zweite Datensätze mit Informationen über die Fahrzeuge, welche sich insbesondere in einem Abstellbereich der Tankstelle befinden.

Jedenfalls kann der Auswerteanordnung nach Empfang (und ggf. Weiterverarbeitung) wenigstens eines zweiten Datensatzes bekannt sein, welche Fahrzeuge sich zu welchem Zeitpunkt auf dem Abstellbereich der Tankstelle befinden und welchem Zapfpunkt jedes Fahrzeug bzw. jeder Nutzer zugeordnet ist. Auch das Zuordnen von Fahrzeugen zu Zapfpunkten erfolgt insbesondere in Echtzeit.

Die Auswerteanordnung ist demnach eingerichtet, basierend auf den empfangenen Daten, den von dem erfassten Fahrzeug für einen Tankvorgang zu verwendenden Zapfpunkt der Mehrzahl von Zapfpunkten der Tankstelle zu bestimmen.

Beispielsweise kann der bestimmte Zapfpunkt durch die Auswerteanordnung für einen Tankvorgang freigeben werden. Unter einer Freigabe eines Zapfpunktes ist zu verstehen, dass ein Tankvorgang, insbesondere die Abgabe von Kraftstoff, ermöglicht wird, derart dass der Abgegebene Kraftstoff anschließend mit einem Kunden (hier: mit dem Nutzer) verrechnet werden kann. Insbesondere ist die Freigabe beschränkt auf die Abgabe einer Kraftstoffhöchstmenge, die einem im Tankstellensystem einstellbaren Geldwert entspricht. Hierdurch kann die Sicherheit erhöht und insbesondere einem Kraftstoffdiebstahl vorgebeugt werden. Auch das Freigeben von Zapfpunkten kann vorzugsweise in Echtzeit erfolgen.

Auch kann vorgesehen sein, dass die Auswerteanordnung eine Nachricht an das mobile Endgerät sendet, welches zuvor den ersten Datensatz gesendet hat. Insbesondere kann eine Abfragenachricht an das mobile Endgerät gesendet werden. Mit der Abfragenachricht kann überprüft werden, ob der Nutzer tatsächlich tanken wird. Insbesondere kann eine Bestätigung des Nutzers als Antwort auf die Abfragenachricht erforderlich sein, damit beispielsweise eine Freigabe des Zapfpunkts erfolgt. Sofern der Nutzer, vorzugsweise über die Tankanwendung seines mobilen Endgeräts, bestätigt, dass ein Tankvorgang initiiert werden soll, kann eine entsprechende Antwortnachricht an die Auswerteanordnung und/oder eine Abrechnungseinrichtung der Tankstelle übertragen werden. Anschließend kann (wie zuvor beschrieben wurde) der Zapfpunkt freigegeben werden.

Die Abfragenachricht kann ferner einen vorgeschlagenen Zapfpunkt enthalten, der entsprechend den vorherigen Ausführungen durch die anmeldungsgemäße Auswerteanordnung bestimmt wurde. Die entsprechende Antwortnachricht kann eine Bestätigung oder Korrektur des vorgeschlagenen Zapfpunkts durch den Nutzer enthalten. Im Falle einer Bestätigung kann der vorgeschlagene Zapfpunkt freigegeben werden; im Falle einer Korrektur kann der vom Nutzer angegebene Zapfpunkt freigegeben werden.

Unabhängig von der Frage, ob die Zapfpunktfreigabe automatisch durch die Auswerteanordnung erfolgt oder eine Nutzer-Interaktion notwendig ist, kann der Zapfpunkt ggf. nur für eine bestimmte Kraftstoffmenge und/oder einen bestimmten Geldbetrag und/oder für eine bestimmte Freigabezeit freigeschaltet werden. Die Freigabezeit kann dabei diejenige Zeit nach der Freigabe des Zapfpunkts sein, innerhalb derer eine Tankung begonnen und/oder abgeschlossen sein muss. Eine Tankung kann dabei als begonnen festgestellt werden, wenn ein Ausgabemittel am Zapfpunkt aus seiner Ruheposition entnommen wird (Ziehen einer Zapfpistole, Entnahme eines Ladesteckers, etc.) oder wenn eine erste Menge Kraftstoff abgegeben wurde. Die Tankung kann dabei als abgeschlossen festgestellt werden, wenn das Ausgabemittel wieder in seine Ruheposition überführt wird (Stecken der Zapfpistole oder eines Ladesteckers in die vorgesehene Halterung am Zapfpunkt, etc.). Nach Abschuss eines Tankvorgangs bzw. bei Erreichen der freigegebenen Kraftstoffmenge oder nach Ablauf der Freigabezeit kann der Zapfpunkt erneut gesperrt werden.

Um die Freigabe zu bewirken, kann die Auswerteanordnung beispielsweise ein Freigabesignal für den bestimmten Zapfpunkt an die Tankstelle (z.B. an eine Freigabesteuerung der Tankvorrichtung oder den Forecourt-Controller der Tankstelle) senden, anhand dessen der bestimmte Zapfpunkt angesteuert und freigegeben wird. Dabei beinhaltet das Freigabesignal wenigstens Daten zur Identifikation des bestimmten Zapfpunkts und kann ggf. weitere Daten für die freigegebene Kraftstoffmenge, den freigegebenen Geldbetrag und/oder die Freigabezeit enthalten.

Gemäß einer ersten Ausführungsform des anmeldungsgemäßen Verfahrens kann das Verfahren ein Bestimmen der Positionsinformation des erfassten Fahrzeugs durch ein Vergleichen eines von der optischen Erfassungseinrichtung generierten Bilddatensatzes des Abstellbereichs und eines Referenzbilddatensatzes des Abstellbereichs umfassen. Der Referenzbilddatensatz kann insbesondere Bilddaten des Abstellbereichs der Tankstelle ohne Fahrzeuge umfassen. Insbesondere kann in einem Bildverarbeitungsprozess bestimmt werden, in welchem Teilbereich des Abstellbereichs das mindestens eine erfasste Fahrzeug ist, indem die (augenblicklich erfassten) Bilddaten bzw. der (augenblicklich erfasste) Bilddatensatz des Abstellbereichs, die/der mindestens ein Fahrzeug umfasst/en, mit dem Referenzbilddatensatz verglichen wird/werden. Vorzugsweise kann ein Bildsubtraktionsverfahren für die Durchführung des Vergleichs eingesetzt werden, bei dem in einer Bilddatendatei der Referenzbilddatensatz von dem durch die optische Erfassungseinrichtung (insbesondere der mindestens einen Kamera) generierte Bilddatensatz abgezogen wird.

Weiter kann ein Bildverarbeitungsprozess das Bestimmen der Fahrzeugkennungen der erfassten Fahrzeuge, beispielsweise durch eine bekannte Nummernschilderkennung ("License Plate Recognition"), umfassen. Insbesondere vorteilhaft kann es sein, wenn vom Bildverarbeitungsprozess bestimmte Fahrzeugkennungen registrierten Nutzern mit einer vorzugsweise fehlerrobusten Zuordnung zugeordnet werden können. In diesem Fall kann beispielsweise vorgesehen sein, dass eine vom Bildverarbeitungsprozess bestimmte Fahrzeugkennung mit N Zeichen einem Nutzer zugeordnet wird, wenn sie an N-1 Stellen mit einer der für den Nutzer registrierten Fahrzeugkennungen übereinstimmt. Auf diese Weise kann die Zuordnung von Fahrzeugen zu Nutzern robust gegenüber Bildverarbeitungsfehlern durchgeführt werden, wie sie etwa aufgrund von ungünstigen Situationen auftreten können (z.B. verschmutzte Kennzeichen).

In einer besonders bevorzugten Ausführungsform kann in dem Referenzbilddatensatz des Abstellbereichs der Abstellbereich (bzw. die entsprechenden Bilddaten des Abstellbereichs) in eine Mehrzahl von Subbereichen unterteilt sein. Jeder Subbereich kann (z.B. genau) einem Zapfpunkt aus der Mehrzahl von Zapfpunkten zugeordnet sein. Das Vergleichen des von der optischen Erfassungseinrichtung generierten Bilddatensatzes des Abstellbereichs und des Referenzbilddatensatzes des Abstellbereichs kann ein Bestimmen der von dem erfassten Fahrzeug belegten Subbereiche aus der Mehrzahl der Subbereiche umfassen. Das Bestimmen der Positionsinformation des erfassten Fahrzeugs kann abhängig von der Zuordnung der belegten Subbereiche zu den Zapfpunkten durchgeführt werden.

Für eine besonders zuverlässige Bestimmung des zu verwendenden Zapfpunktes, kann in dem Referenzbilddatensatz des Abstellbereichs der Abstellbereich (bzw. die entsprechenden Bilddaten des Abstellbereichs) in eine Mehrzahl von Subbereichen unterteilt werden. Die Referenzbilddaten des Abstellbereichs können in eine Mehrzahl von Subbereiche zerlegt sein. Vorzugsweise kann der Abstellbereich für Fahrzeuge dabei in so viele Sub- bzw. Teilbereiche unterteilt werden, dass selbst ein kleiner PKW oder ein Motorrad mehrere Subbereiche belegt, wenn er/es im Abstellbereich abgestellt wird. Bevorzugt sind die Subbereiche zwischen 0,5 m² und 4 m², vorzugsweise etwa 1 m², groß. Es versteht sich, dass die Subbereiche eines Abstellbereichs unterschiedlich groß sein können. Mit anderen Worten: Der von der optischen Erfassungseinrichtung erfassbare Abstellbereich kann vorzugsweise in ein Raster von Subbereichen unterteilt werden. Dieses Raster kann dann für die Positionsbestimmung von Fahrzeugen genutzt werden.

Insbesondere kann jeder Subbereich einem Zapfpunkt zugeordnet sein. Beispielsweise können für mindestens eine Tankstelle die zugehörigen Zapfpunkte in einer Datenbank registriert sein. Insbesondere können jeder Zapfpunktkennung einer Tankstelle zugehörige Subbereiche zugeordnet sein. Eine Zapfpunktkennung kann insbesondere eine Zapfpunktnummer (z.B. 1, 2, 3 etc.) sein. Die Zuordnungen können in der Datenbank gespeichert sein.

Ein Subbereich kann genau einem Zapfpunkt zugeordnet sein. Alternativ kann vorgesehen sein, dass ein Subbereich durch Angaben von Wahrscheinlichkeiten mehreren Zapfpunkten zugeordnet sein kann. Diese Zuordnungswahrscheinlichkeiten von Subbereichen zu Zapfpunkten können als weitere Daten/Parameter die Orientierung eines Fahrzeugs in dem Abstellbereich, die Lage des Tankstutzens des Fahrzeugs und/oder andere geeignete Fahrzeugparameter berücksichtigen. Beispielweise: Ein optisch erfasstes Fahrzeug steht - gemäß dem zuvor Gesagten - auf mehreren Subbereichen des Abstellbereichs. Unter anderem steht das Fahrzeug auf Subbereich 17. In diesem Fall kann für diesen Subbereich gespeichert und angegeben sein, dass, wenn ein Fahrzeug mit Tankstutzen "hinten rechts" in Fahrtrichtung "Ost" auf dem Subbereich 17 steht, mit 85% Wahrscheinlichkeit Zapfpunkt 5 genutzt wird und mit 15% Wahrscheinlichkeit Zapfpunkt 6.

Die Wahrscheinlichkeit, mit der ein Zapfpunkt für ein bestimmtes erfasstes Fahrzeug genutzt wird, kann sich somit aus den Nutzungswahrscheinlichkeiten ergeben, die jeder Zapfpunkt in Bezug zu Subbereiche hat, in denen das erfasste Fahrzeug steht. Diese Zuordnungswahrscheinlichkeiten können vorab durch Tests ermittelt oder geschätzt worden sein.

Anmeldungsgemäß können die Zuordnungswahrscheinlichkeiten statisch vorgeben sein. In einer Ausführungsform können die Wahrscheinlichkeiten einer Zuordnung bzw. die Zuordnungen von Subbereichen zu Zapfpunkten als neuronales Netz angelegt sein, das auf der Basis von tatsächlich erfolgten Tankungen selbstlernend ist. Mit anderen Worten, ein anmeldungsgemäßes System kann lernen, mit welcher Wahrscheinlichkeit welche Zapfpunkte für Fahrzeuge bei einer bestimmten optisch erfassten Abstellsituation (Abstellort, Orientierung des Fahrzeugs, Lage des Tankstutzens etc.) benutzt werden. Hierdurch kann die Zuverlässigkeit der Bestimmung während des Betriebs stetig erhöht werden.

Wenn nun Fahrzeuge auf dem Abstellbereich zum Betanken abgestellt werden und die optische Erfassungseinrichtung der Tankstelle einen Bilddatensatz generiert, auf dem die Fahrzeuge erfasst sind, dann entsteht auf diese Weise zunächst einer der oben beschriebenen unverarbeiteten zweiten Datensätze mit einem augenblicklich generierten Bilddatensatz.

Entsprechend den obigen Ausführungen kann durch einen Vergleich, insbesondere durch das beschrieben Subtraktionsverfahren, bestimmt werden, welche Subbereiche von einem erfassten Fahrzeug (zumindest teilweise) belegt sind. Entsprechend den hinterlegten Zuordnungen, vorzugsweise den hinterlegten Zuordnungswahrscheinlichkeiten, kann dann der zu verwendende Zapfpunkt bestimmt werden. Insbesondere kann die Zapfpunktkennung des zu verwendenden Zapfpunkts basierend auf den gespeicherten Zuordnungen bestimmt werden. Wie bereits beschrieben wurde, können diese Schritte durch die Auswerteanordnung durchgeführt werden.

Wenn zumindest ein Teil der zuvor beschriebenen Schritte durch ein lokales Bilddatenauswertemodul der Auswerteanordnung durchgeführt wird, welches sich an der Tankstelle befindet, dann kann es vorteilhaft sein, wenn das Bilddatenauswertemodul der optischen Erfassungseinrichtung über eine lokale Kopie der Zuordnungsdaten, beispielsweise aus einer entfernt angeordneten zentralen Datenbank, welche die entsprechende Tankstelle betreffen, verfügt. Weiter vorteilhaft kann es bei diesem Ausführungsbeispiel sein, wenn das Bildverarbeitungsmodul der optischen Erfassungseinrichtung anhand der ermittelten Fahrzeugkennungen in der Datenbank hinterlegte weitere Fahrzeugdaten abfragen kann, wie z.B. Lage der Tankstutzen, verwendbare Kraftstoffe etc., und diese Daten zu einer nochmals verbesserten Bestimmung der Zapfpunkte verwenden, an denen die erfassten Fahrzeuge voraussichtlich tanken werden.

Wenn das Bilddatenauswertemodul durch ein entfernt angeordnetes Bildverarbeitungsmodul der Auswerteanordnung ausgeführt wird, dann können dort in vorteilhafter Weise auch Daten aus der (entfernt angeordneten zentralen) Datenbank verwendet werden. Aus den empfangenen unverarbeiteten zweiten Datensätzen kann das Bilddatenauswertemodul die Fahrzeugkennungen der erfassten Fahrzeuge bestimmen. Wenn zu diesen Fahrzeugen weitere Fahrzeugdaten in der Datenbank angelegt sind (Lage der Tankstutzen, verwendbare Kraftstoffe etc.), dann kann die Auswerteanordnung diese Daten zusätzlich zur Ermittlung der zu verwendenden Zapfpunkte nutzen.

Wie bereits beschrieben wurde, können weitere Daten/Parameter bei der Bestimmung des zu verwendenden Zapfpunkts, insbesondere der Zapfpunktkennung, berücksichtigt werden. Gemäß einer Ausführungsform kann das Bestimmen der Positionsinformation zumindest auf einem der folgenden Daten basieren:
- verfügbare Zapfpunkte an der Tankstelle,
- Lage (bzw. Position) des Tankstutzens des erfassten Fahrzeugs,
- Orientierung des erfassten Fahrzeugs auf dem Abstellbereich der Tankstelle,
- zulässige Kraftstoffe für das erfasste Fahrzeug und den von der Mehrzahl von Zapfpunkten bereitgestellten Kraftstoffen, und
- Entfernung zwischen dem erfassten Fahrzeug, insbesondere der Lage des Tankstutzens des erfassten Fahrzeugs, und den Zapfpunkten.

Unter "verfügbare Zapfpunkte" sind im Nachfolgenden insbesondere Zapfpunkte zu verstehen, die von keinem anderen Fahrzeug belegt sind (also augenblicklich für einen Tankvorgang nicht freigegeben sind) oder die gegenwärtig nicht deaktiviert sind (z.B. aufgrund eines Defekts, eines Wartungsvorgangs etc.). Das Bestimmen des zu verwendenden Zapfpunkts, welches das Zuordnen einer Fahrzeugkennung zu einer Zapfpunktkennung umfassen kann, kann zumindest auf verfügbaren Zapfpunkten bzw. nicht verfügbaren Zapfpunkten basieren. Insbesondere kann hierdurch die grundsätzlich zur Verfügung stehende Anzahl an Zapfpunkten verringert werden.

Wenn beispielsweise eine Tankstelle vier Zapfpunkte aufweist und hiervon gegenwärtig ein Zapfpunkt nicht zur Verfügung steht, kann die Zahl der Zapfpunkte für die Zuordnung der erfassten Fahrzeuge eingeschränkt werden.

Darüber hinaus kann die Zuordnung eines Fahrzeugs zu einem Zapfpunkt die von jedem Zapfpunkt zur Verfügung gestellten Kraftstoffarten und die von den erfassten Fahrzeugen zu verwendenden Kraftstoffarten berücksichtigen. Beispielsweise können diese Daten in der zuvor beschriebenen Datenbank hinterlegt sein.

Die Zuordnung eines erfassten Fahrzeugs zu einem Zapfpunkt kann zumindest basieren auf den zulässigen Kraftstoffarten des Fahrzeugs und auf der von jedem Zapfpunkt zur Verfügung gestellte Kraftstoffart. Insbesondere kann hierdurch die grundsätzlich zur Verfügung stehende Anzahl an Zapfpunkten verringert werden. Wenn beispielsweise ein Zapfpunkt nur eine erste Kraftstoffart anbietet, das Fahrzeug jedoch eine andere Kraftstoffart benötigt, kann die Zahl der für eine Zuordnung in Frage kommenden Zapfpunkte eingeschränkt werden. Insbesondere können nur Zapfpunkte für einen Tankvorgang eines erfassten Fahrzeugs freigebbar sein, die eine Kraftstoffart anbieten, die für dieses Fahrzeug erlaubt ist. Vorzugsweise kann dieser Schritt mit mindestens einem der zuvor beschriebenen Schritte verbunden werden.

Ferner kann vorgesehen sein, dass beispielsweise durch die Auswerteanordnung eine Diskrepanz festgestellt werden kann zwischen dem von einem bestimmten Zapfpunkt bereitgestellten Kraftstoffart (z.B. Diesel) und der von dem Fahrzeug zu verwendende Kraftstoffart (z.B. Benzin). Dies kann insbesondere ein Indiz dafür sein, dass der Nutzer versehentlich sein Fahrzeug mit einer falschen Kraftstoffart betanken wird. Dann kann vorzugsweise eine Nachricht an das dem Nutzer zugeordnete mobile Endgerät mit einem entsprechenden Warnhinweis übertragen werden.

Beispielsweise kann die Bestimmung der Entfernung bzw. des Abstands basierend auf den von der optischen Erfassungseinrichtung bereitgestellten Bilddaten erfolgen. Insbesondere kann das Bilddatenauswertemodul (und/oder die Auswerteanordnung) eingerichtet sein, die jeweilige Entfernung des erfassten (parkenden) Fahrzeugs zu den jeweiligen Zapfpunkten der Tankstelle zu bestimmen. Der zu verwendende Zapfpunkt kann (zumindest auch), vorzugsweise basierend auf der kürzesten Entfernung zwischen dem erfassten Fahrzeug (z.B. Fahrzeugmittelpunkt, vorzugsweise Tankstutzen) und den jeweiligen Zapfpunkten (z.B. Mittelpunkt des Zapfpunktes), bestimmt werden.

Ebenfalls kann die Freigabe eines Zapfpunktes von weiteren Auswerteschritten abhängen. Gemäß einer Ausführungsform kann der Auswertevorgang das Vergleichen der Nutzerkennung mit in einer Datenbank gespeicherten zulässigen Nutzerkennungen umfassen. Eine Freigabe eines Zapfpunktes für einen Tankvorgang kann beispielsweise nur bei einer detektierten Korrespondenz zwischen erfasster Nutzerkennung und gespeicherter Nutzerkennung initiiert werden. Mit anderen Worten: Freigegeben werden Zapfpunkte nur für Nutzer, die im entsprechenden Tankstellensystem registriert sind und nicht gesperrt sind.

Alternativ oder zusätzlich kann der Auswertevorgang das Vergleichen der Fahrzeugkennung mit mindestens einer in einer Datenbank gespeicherten zulässigen Fahrzeugkennung umfassen. Auch hier kann vorgesehen sein, dass eine Freigabe eines Zapfpunktes für einen Tankvorgang beispielsweise nur bei einer detektierten Korrespondenz zwischen erfasster Fahrzeugkennung und gespeicherter Fahrzeugkennung initiiert werden kann. Mit anderen Worten: Freigegeben werden Zapfpunkte nur für Fahrzeuge, die im entsprechenden Tankstellensystem registriert sind und nicht gesperrt sind.

Darüber hinaus kann gemäß einer Ausführungsform der Anmeldung ein (automatischer) Abrechnungsvorgang durchgeführt werden. Das Verfahren kann ein Empfangen, durch die Auswerteanordnung, von Daten zur abgegebenen Kraftstoffmenge von dem verwendeten Zapfpunkt umfassen. Die Auswerteanordnung kann, basierend auf der abgegebenen Kraftstoffmenge, einer Preisangabe und beispielsweise in dem Nutzerkonto des Nutzers gespeicherten Abrechnungsdaten (z.B. Kreditkartennummer, Kontodaten etc.), eine (automatische) Abrechnung durchführen. Beispielsweise kann eine entsprechende Abrechnungsnachricht an das mobile Endgerät gesendet werden, und ein fiskalisch gültiger Kassenbeleg kann an eine zu dem Nutzer hinterlegte E-Mail-Adresse gesendet werden.

Alternativ kann das Verfahren ein Durchführen eines Abrechnungsvorgangs durch eine lokale Abrechnungseinrichtung der Tankstelle, basierend auf der empfangenen Kraftstoffmenge, der Nutzerkennung und der Zapfpunktkennung des verwendeten Zapfpunktes, vorsehen. Hierzu kann die Auswerteanordnung der lokalen Abrechnungseinrichtung bzw. dem Zahlpunkt (z.B. Kasse innerhalb eines Tankstellengebäudes) die entsprechenden Daten bereitstellen.

Gemäß einer weiteren Ausführungsform des anmeldungsgemäßen Verfahrens kann das Bestimmen des von dem Nutzer des erfassten Fahrzeugs zu verwendenden Zapfpunkts ein Zuordnen eines empfangenen ersten Datensatzes zu einem empfangenen zweiten Datensatz, basierend auf in einer Datenbank gespeicherten Verknüpfungen von Nutzerkennungen zu Fahrzeugkennungsinformationen, umfassen. Alternativ oder zusätzlich kann der zweite Datensatz eine Tankstellenkennung der Tankstelle umfassen. Das Bestimmen des von dem Nutzer des erfassten Fahrzeugs zu verwendenden Zapfpunkts kann ein Zuordnen eines empfangenen ersten Datensatzes zu einem empfangenen zweiten Datensatz, basierend auf der Tankstellenkennung des ersten Datensatzes und der Tankstellenkennung des zweiten Datensatzes, umfassen.

Um die von zwei Datenquellen (mobiles Endgerät und optische Erfassungseinrichtung) empfangenen ersten und zweiten Datensätze, z.B. für eine Abrechnung, einander zuzuordnen zu können, können in einer Datenbank Daten von registrierten Nutzern (z.B. in Form von Nutzerkonten) gespeichert sein. Jeder Nutzerkennung kann mindestens eine Fahrzeugkennung des mindestens einen Fahrzeugs des Nutzers zugeordnet sein. Zu den gespeicherten Fahrzeugkennungen können in der Datenbank auch weitere Fahrzeugdaten angelegt sein, die bei der Bestimmung des Zapfpunkts für dieses Fahrzeug berücksichtigt werden können, insbesondere z.B. die Lage des Tankstutzens am Fahrzeug (z.B. Fahrerseite, Beifahrerseite, Heck des Fahrzeugs und/oder Front des Fahrzeugs , "hinten rechts" etc.), die Art des Fahrzeugs (z.B. PKW, Kleinlaster, Motorrad), die verwendbaren Kraftstoffe (z.B. Benzin, Diesel, Gas, Strom), die Länge und die Breite des Fahrzeugs etc. Basierend auf den in der Datenbank gespeicherten Daten (Verknüpfung von Fahrzeugkennung und Nutzerkennung) und/oder basierend auf der Tankstellenkennung kann ein erster Datensatz dem zweiten Datensatz zugeordnet werden.

Gemäß der obigen Beschreibung können in der Auswerteanordnung, z.B. bei Freigabe eines Zapfpunkts, mindestens folgende Daten für die Durchführung und Abrechnung eines Tankvorgangs vorliegen:
- die Nutzerkennung und die Tankstellenkennung (aus dem ersten Datensatz),
- die Fahrzeugkennung (aus dem zweiten Datensatz und/oder durch oben beschriebene Bildverarbeitung aus den Bilddaten des zweiten Datensatzes),
- der freigegebene Zapfpunkt (als Resultat aus dem Auswertevorgang, ggf. bestätigt oder korrigiert durch eine Antwortnachricht des mobilen Endgeräts) und
- ein systemgenerierter Zeitstempel für den Beginn der Transaktion.

Eine Zuordnung von Nutzer und Zapfpunkt für einen Tankvorgang kann damit eindeutig und sicher bestimmt werden.

Wie bereits beschrieben wurde, kann ein Aussenden des ersten Datensatzes, der die Tankstellenkennung und die Nutzerkennung umfasst, auf verschiedene Weise ausgelöst werden. Gemäß einer bevorzugten Ausführungsform des anmeldungsgemäßen Verfahrens kann der Tankstelle mindestens eine Sendeeinrichtung zugeordnet sein. Das Verfahren kann ferner ein Empfangen, durch das mobile Endgerät, mindestens einer der Aufwecknachrichten umfassen, derart, dass mindestens eine Aktivierung einer auf dem mobilen Endgerät installierten Tankanwendung bewirkt wird. Beispielsweise kann das Verfahren ein Senden mindestens einer Aufweck-Nachricht von der Sendeeinrichtung an das mobile Endgerät umfassen, derart, dass mindestens eine Aktivierung einer auf dem mobilen Endgerät installierten Tankanwendung bewirkt wird. Insbesondere kann die Aufwecknachricht durch das mobile Endgerät empfangen werden und durch das Empfangen eine Aktivierung der auf dem mobilen Endgerät installierten Tankanwendung ausgelöst werden. Das Verfahren kann ferner ein Empfangen des ersten Datensatzes umfassen, dessen Aussendung durch die aktivierte Tankanwendung des mobilen Endgeräts bewirkt wurde.

Eine eindeutige Zuordnung der Sendeeinrichtung zu einer Tankstelle kann insbesondere durch eine (drahtlose und/oder vorzugsweise drahtgebundene) Kommunikationsverbindung zwischen einer datentechnischen Einrichtung der Tankstelle und der mindestens einen Sendeeinrichtung bewirkt werden. Zudem ist vorliegend unter einer Zuordnung insbesondere zu verstehen, dass das Sendefeld der einen oder mehreren Sendeeinrichtung/en einer Tankstelle zumindest den Abstellbereich und/oder den gesamten Zufahrtsbereich zum Abstellbereich der Tankstelle abdeckt. Mit anderen Worten kann ein Nutzer mit seinem Fahrzeug nur zu einem Zapfpunkt der Tankstelle gelangen durch ein Passieren des Sendefelds der Sendeeinrichtung.

Das vorliegende Verfahren umfasst das vorzugsweise (quasi) kontinuierliche Aussenden eines Sendefelds durch die Sendeeinrichtung. Das Sendefeld kann zumindest eine Aufwecknachricht umfassen.

Gelangt ein mobiles Endgerät in den (vorgebbaren) Sendebereich bzw. in das Sendefeld der mindestens einen Sendeeinrichtung, bewirkt der Empfang der Aufwecknachricht durch das mobile Endgerät die Aktivierung der Tankanwendung. Insbesondere kann die Aufwecknachricht (oder eine weitere Nachricht) Instruktionen umfassen, die nach einem Empfang der Nachricht ein Aussenden der (gespeicherten) Nutzerkennung und der (empfangenen) Tankstellenkennung an die Auswerteeinrichtung bewirken. Gemäß einer Ausführungsform kann die Tankstellenkennung der Tankstelle in der Aufwecknachricht enthalten sein. Alternativ oder zusätzlich kann mindestens eine weitere Nachricht, umfassend die Tankstellenkennung der Tankstelle, durch das mobile Endgerät, von der Sendeeinrichtung oder von einer weiteren, der Tankstelle zugeordneten Sendeeinrichtung empfangen werden. Vorzugsweise können die in einem Speichermodul des mobilen Endgeräts gespeicherte Nutzerkennung und die empfangene Tankstellenkennung, insbesondere ausgelöst durch einen Empfang einer Aufwecknachricht, umfassend die Tankstellenkennung, von dem mobilen Endgerät an die Auswerteeinrichtung ausgesendet werden. In vorzugsweise automatischer Weise, also ohne Nutzeraktionen, kann das Aussenden der Tankstellenkennung und der Nutzerkennung bewirkt werden. Es versteht sich, dass ggf. eine Bestätigung durch einen Nutzer erforderlich sein kann.

Eine anmeldungsgemäße Sendeeinrichtung kann RFID-Technologie, Infrarot-Technologie, WLAN-Technologie, in Farbe und/oder Zeitintervallen moduliertes Licht und/oder eine Schall-Technologie verwenden. Vorzugsweise kann die Sendeeinrichtung ein Bluetooth-Beacon sein, der ein Bluetooth-Signal aussendet. Besonders bevorzugt kann als Sendeeinrichtung ein BLE (Bluetooth Low Energy) Beacon eingesetzt werden.

Ein noch weiterer Aspekt der Anmeldung ist ein Tankstellensystem. Das Tankstellensystem umfasst mindestens eine Tankstelle mit einer Mehrzahl von Zapfpunkten. Das Tankstellensystem umfasst mindestens eine Auswerteanordnung. Die Auswerteanordnung umfasst mindestens ein Empfangsmodul, das eingerichtet ist zum Empfangen mindestens eines ersten Datensatzes, der zumindest eine Nutzerkennung des Nutzers des mobilen Endgeräts und mindestens eine Tankstellenkennung der Tankstelle umfasst. Das Empfangsmodul ist zum Empfangen, von einer optischen Erfassungseinrichtung der Tankstelle, mindestens eines zweiten Datensatzes eingerichtet, der mindestens eine Positionsinformation eines in mindestens einem Abstellbereich der Tankstelle durch die optische Erfassungseinrichtung erfassten Fahrzeugs und mindestens eine Fahrzeugkennungsinformation des durch die optische Erfassungseinrichtung erfassten Fahrzeugs umfasst. Die Auswerteanordnung umfasst mindestens ein Auswertemodul, das eingerichtet ist zum Auswerten, in einem Auswertevorgang, des empfangenen ersten Datensatzes und des empfangenen zweiten Datensatzes derart, dass der von dem Nutzer des erfassten Fahrzeugs zu verwendende Zapfpunkt aus der Mehrzahl von Zapfpunkten der Tankstelle bestimmt wird.

Das Tankstellensystem kann insbesondere durch ein zuvor beschriebenes Verfahren betrieben werden. Vorzugsweise kann die Auswerteanordnung mindestens ein Freigabemodul umfassen, das eingerichtet ist zum Freigeben des bestimmten Zapfpunktes. Das Auswertemodul kann zum Beispiel durch ein zuvor beschriebenes Bilddatenauswertemodul gebildet sein.

Gemäß einer Ausführungsform des anmeldungsgemäßen Tankstellensystems kann die Auswerteanordnung zumindest teilweise in der Tankstelle angeordnet sein. Beispielsweise kann zumindest ein Bilddatenauswertemodul von der optischen Erfassungseinrichtung umfasst sein. Alternativ oder zusätzlich kann die Auswerteanordnung zumindest teilweise entfernt von der Tankstelle angeordnet sein. Beispielsweise kann zumindest das Auswertemodul auf einem entfernt von der Tankstelle angeordneten Server implementiert sein.

Ein noch weiterer Aspekt der Anmeldung ist eine Auswerteanordnung eines Tankstellensystems, insbesondere eines zuvor beschriebenen Tankstellensystems. Die Auswerteanordnung umfasst mindestens ein Empfangsmodul, das eingerichtet ist zum Empfangen mindestens eines ersten Datensatzes, der zumindest eine Nutzerkennung des Nutzers des mobilen Endgeräts und mindestens eine Tankstellenkennung der Tankstelle umfasst. Das Empfangsmodul ist zum Empfangen, von einer optischen Erfassungseinrichtung der Tankstelle, mindestens eines zweiten Datensatzes eingerichtet, der mindestens eine Positionsinformation eines in mindestens einem Abstellbereich der Tankstelle durch die optische Erfassungseinrichtung erfassten Fahrzeugs und mindestens eine Fahrzeugkennungsinformation des durch die optische Erfassungseinrichtung erfassten Fahrzeugs umfasst. Die Auswerteanordnung umfasst mindestens ein Auswertemodul, das eingerichtet ist zum Auswerten, in einem Auswertevorgang, des empfangenen ersten Datensatzes und des empfangenen zweiten Datensatzes derart, dass der von dem Nutzer des erfassten Fahrzeugs zu verwendende Zapfpunkt aus der Mehrzahl von Zapfpunkten der Tankstelle bestimmt wird.

Die Auswerteanordnung kann insbesondere durch ein zuvor beschriebenes Verfahren betrieben werden. Vorzugsweise kann die Auswerteanordnung mindestens ein Freigabemodul umfassen, das eingerichtet ist zum Freigeben des bestimmten Zapfpunktes.

Ein anmeldungsgemäßes mobiles Endgerät weist Verarbeitungsmittel auf, wie Prozessor/en, Speicher, Sende-/Empfangsmittel, wie eine Antenne, etc.. Beispielhafte und nicht abschließende mobile Endgeräte sind Smartphones, Tablet-Computer, mobile Spielekonsolen, Laptops, Netbooks, Datenbrillen, Smart-Watches und ähnliche Wearables. Gerade im Zusammenhang mit Tankvorgängen kann unter einem mobilen Endgerät jedoch auch das zu tankende Fahrzeug selbst bzw. dessen Infotainmentsystem verstanden werden,

Ein anmeldungsgemäßes Modul oder eine anmeldungsgemäße Einrichtung kann zumindest teilweise aus Software und/oder zumindest teilweise aus Hardware gebildet sein.

Die Merkmale der Verfahren, Tankstellensysteme und Auswerteanordnungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert, eigenständig erfinderisch sein.

Es gibt nun eine Vielzahl von Möglichkeiten, das anmeldungsgemäße Verfahren, das anmeldungsgemäße Tankstellensystem und die anmeldungsgemäße Auswerteanordnung auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Auswerteanordnung gemäß der vorliegenden Anmeldung,
- Fig. 2: eine schematische Ansicht eines Ausführungsbeispiels eines Tankstellensystems gemäß der vorliegenden Anmeldung,
- Fig. 3: ein Diagramm eines Ausführungsbeispiels eines Verfahrens gemäß der vorliegenden Anmeldung,
- Fig. 4: ein Diagramm eines weiteren Ausführungsbeispiels eines Verfahrens gemäß der vorliegenden Anmeldung, und
- Fig. 5: eine schematische Ansicht eines weiteren Ausführungsbeispiels eines Tankstellensystems gemäß der vorliegenden Anmeldung.

Nachfolgend werden für gleiche Elemente gleiche Bezugszeichen verwendet. Die beschriebenen Ausführungsbeispiele dienen nur der Erläuterung und sind nicht beschränkend.

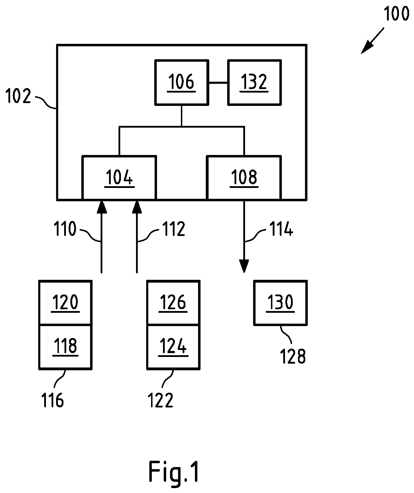

Die Figur 1 zeigt eine schematische Ansicht eines Ausführungsbeispiels einer Auswerteanordnung 102 gemäß der vorliegenden Anmeldung. Die Auswerteanordnung 102 ist insbesondere eine Komponente eines Tankstellensystems 100. Ein Tankstellensystem 100 kann eine Mehrzahl von (nicht gezeigten) Tankstellen umfassen.

Die Auswerteanordnung 102 kann durch mindestens eine Recheneinrichtung (z.B. Computer) gebildet sein. Die Auswerteanordnung 102 kann vorliegend auch als Backend-System bezeichnet werden. Insbesondere kann die Auswerteanordnung 102 eine zentrale Auswerteanordnung 102 für eine Vielzahl von Tankstellen sein. Alternativ kann eine Auswerteanordnung zumindest teilweise durch eine Recheneinrichtung oder dergleichen einer Tankstelle gebildet sein.

Die Auswerteanordnung 102 verfügt über mindestens ein Empfangsmodul 104. Das Empfangsmodul 104 ist eingerichtet, mindestens einen ersten Datensatz 116 von einem mobilen Endgerät des Nutzers zu empfangen. Der erste Datensatz 116 umfasst zumindest eine Nutzerkennung 118 eines Nutzers eines Fahrzeugs und mindestens eine Tankstellenkennung 120 der Tankstelle. Insbesondere kann ein erster Datensatz in Form wenigstens einer Nachricht 116 (beispielsweise aus einem oder mehreren Paket/en), umfassend die Nutzerkennung 118 und die Tankstellenkennung 120, empfangen werden. Insbesondere kann der erste Datensatz 116 über einen zumindest teilweise drahtlos gebildeten Kommunikationskanal 110 (z.B. Mobilfunkkanal) von einem mobilen Endgerät empfangen werden.

Wie oben beschrieben wurde, kann durch die Nutzerkennung 118 ein Nutzer eindeutig identifiziert werden. Durch eine Tankstellenkennung 120 wird in dem Tankstellensystem 100 eine Tankstelle eindeutig identifiziert werden. Insbesondere für einen Tankvorgang kann eine Nutzerkennung 118 mit einer Tankstellenkennung 120 einer Tankstelle (an der sich der Nutzer befindet) verknüpft sein. Die Verknüpfung wird dadurch erreicht, dass eine Nutzerkennung 118 und eine Tankstellenkennung 120 in einem (gemeinsamen) ersten Datensatz 116 durch das Empfangsmodul 104 der Auswerteanordnung 102 empfangen werden.

Vorzugsweise über einen weiteren drahtlosen und/oder drahtgebundenen Kommunikationskanal 112 empfängt das Empfangsmodul 104 einen zweiten, beispielsweise verarbeiteten, Datensatz 122.

In dem vorliegenden zweiten Datensatz 122 können als Fahrzeugkennungsinformation eine Fahrzeugkennung 124 eines erfassten Fahrzeugs des Nutzers und eine Positionsinformation 126 (z.B. eine Zapfpunktkennung des zu verwendenden Zapfpunkt; Bilddaten, aus denen eine Zapfpunktkennung des zu verwendenden Zapfpunkt bestimmt werden kann) des erfassten Fahrzeugs miteinander verknüpft sein. Sowohl die Fahrzeugkennung 124 als auch die Positionsinformation 126 beispielsweise in Form eines Positionsdatensatzes 126 basieren auf Bilddaten bzw. einem Bilddatensatz einer optischen Erfassungseinrichtung der Tankstelle. Insbesondere ist die optische Erfassungseinrichtung die Datenquelle des Datensatzes 122. Mit anderen Worten empfängt die Auswerteanordnung 102 Fahrzeugkennungsinformationen 124 und Positionsinformationen 126 der von der optischen Erfassungseinrichtung erfassten Fahrzeuge auf einem Abstellbereich der Tankstelle.

Es versteht sich, dass das Empfangsmodul 104 aus zwei oder mehr (separaten) Sub-Modulen gebildet sein kann, wobei jedes Sub-Modul für mindestens einen verwendeten Kommunikationskanal 110, 112 ausgebildet sein kann.

Ferner umfasst die Auswerteanordnung 102 mindestens ein Auswertemodul 106. Die empfangenen ersten und zweiten Datensätze 116, 120 werden dem Auswertemodul 106 bereitgestellt.

Das Auswertemodul 106 ist eingerichtet, die bereitgestellten ersten und zweiten Datensätze 116, 122 auszuwerten. So ist das Auswertemodul 106 zum Auswerten der empfangenen Nutzerkennung 118, der empfangenen Tankstellenkennung 120, der empfangenen Fahrzeugkennungsinformation 124 und der empfangenen Positionsinformation 126 des erfassten Fahrzeugs in einem Auswertevorgang derart eingerichtet, dass der von dem Nutzer des erfassten Fahrzeugs zu verwendende Zapfpunkt der Mehrzahl von Zapfpunkten der Tankstelle bestimmt wird.

Die Auswerteanordnung 102 kann über mindestens eine Datenbank 132 verfügen und/oder mit mindestens einer Datenbank verbindbar sein. Beispielhaft ist eine in der Auswerteanordnung 102 integrierte Datenbank 132 dargestellt. In der Datenbank 132 sind insbesondere Daten über die Tankstellen des Tankstellensystems 100 und Nutzerdaten gespeichert. Beispielsweise ist für jeden registrierten Nutzer ein Nutzerdatensatz bzw. Nutzerkonto in der Datenbank 132 hinterlegt. Ein Nutzerdatensatz kann die Nutzerkennung des Nutzers, eine Fahrzeugkennungsinformation (z.B. Kennzeichen des Fahrzeugs) des mindestens einen Fahrzeugs des Nutzers und optional weitere Daten, wie Kontodaten, Kreditkartennummer etc., umfassen.

Ferner kann für jede in dem Tankstellensystem 100 zugehörige bzw. registrierte Tankstelle ein Tankstellendatensatz in der Datenbank 132 gespeichert sein. Ein Tankstellendatensatz kann zumindest die Tankstellenkennung und die Zapfpunktkennungen dieser Tankstelle umfassen. Wie zuvor ausgeführt wurde, können weitere Daten, wie Bildreferenzdatensätze, Subbereiche, Zuordnungen von Subbereichen zu Zapfpunktkennungen und/oder Zuordnungswahrscheinlichkeiten von Subbereichen zu Zapfpunktkennungen in einem Tankstellendatensatz gespeichert sein.

In dem Auswertevorgang kann, basierend auf den gespeicherten Nutzer- und Tankstellendatensätzen der zu verwendende Zapfpunkt, eindeutig bestimmt werden. So kann, insbesondere basierend auf den gespeicherten Nutzerdatensätzen eine Zuordnung der empfangenen ersten und zweiten Datensätze 116 und 122, zueinander erfolgen. Insbesondere umfasst der Auswertevorgang ein Bestimmen einer Zuordnung der empfangenen Tankstellenkennung 120 zu der empfangenen Positionsinformation 126 durch ein Zuordnen der empfangenen Nutzerkennung 118 zu der Fahrzeugkennung 124, basierend auf in der Datenbank 132 gespeicherten Zuordnungen von Nutzerkennungen zu Fahrzeugkennungen. Alternativ kann der zweite Datensatz ebenfalls eine Tankstellenkennung umfassen, so dass basierend auf den Tankstellenkennungen der ersten und zweiten Datensätze eine Zuordnung erfolgen kann. Der von dem erfassten Fahrzeug zu verwendende Zapfpunkt aus der Mehrzahl von Zapfpunkten der Tankstelle kann dann, basierend auf der bestimmten Zuordnung und den empfangenen Datensätzen 116 und 122, bestimmt werden. Insbesondere kann jeweils einem Nutzer ein zu verwendender Zapfpunkt sicher und eindeutig zugeordnet werden; nachfolgende Tankvorgänge an den bestimmten Zapfpunkten können damit mit den jeweiligen Nutzern verrechnet werden.

Die bestimmte Zapfpunktkennung und die zugehörige Tankstellenkennung können von dem Auswertemodul 106 einem Freigabemodul 108, insbesondere ein Sendemodul 108, bereitgestellt werden. Das Freigabemodul 108 ist eingerichtet, eine Freigabe des bestimmten Zapfpunktes zu bewirken. Hierzu kann das Freigabemodul 108 eine Freigabenachricht an den bestimmten Zapfpunkt (oder eine Freigabesteuerung der Tankstelle, z.B. eine Forecourt-Steuerung der Tankstelle) über einen Kommunikationskanal 114 senden. Der Kommunikationskanal 114 kann insbesondere mit dem Kommunikationskanal 112 identisch sein. Erforderliche Adressdaten können in der Datenbank 132 gespeichert sein.

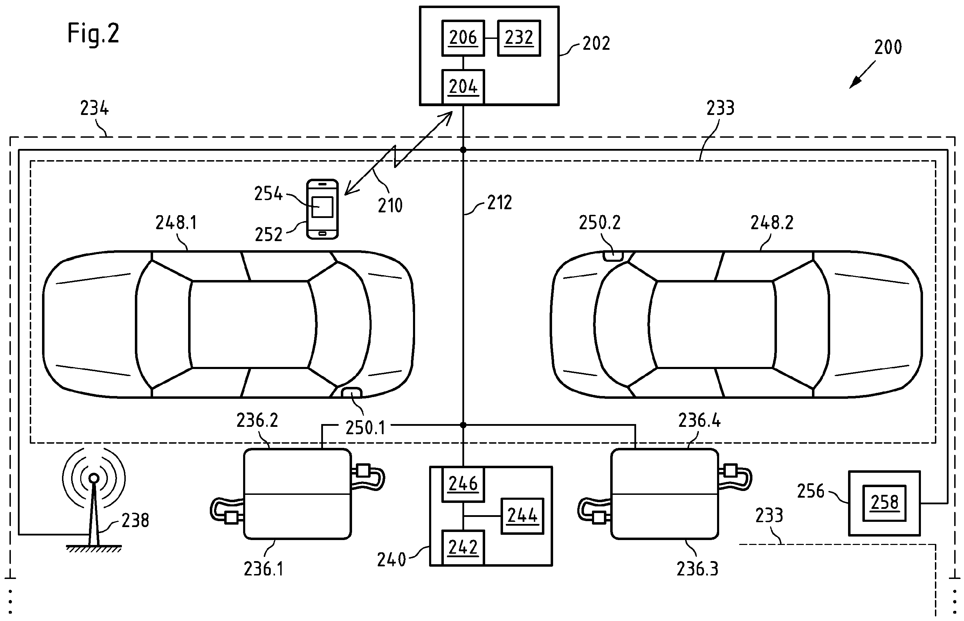

Die Figur 2 zeigt eine schematische Ansicht eines Ausführungsbeispiels eines Tankstellensystems 200 gemäß der vorliegenden Anmeldung. Zur Vermeidung von Wiederholungen werden nachfolgend im Wesentlichen nur die Unterschiede zu dem Ausführungsbeispiel nach Figur 1 beschrieben. Für die anderen Komponenten des Tankstellensystems 200 wird auf die obigen Ausführungen verwiesen.

In der Figur 2 ist eine beispielhafte Tankstelle 234 eines anmeldungsgemäßen Tankstellensystems 200 dargestellt. Es versteht sich, dass ein Tankstellensystem über zwei oder mehr Tankstellen verfügen kann. Die Tankstelle 234 umfasst eine Mehrzahl von Zapfpunkten 236.1 bis 236.4. Jeder Zapfpunkt 236.1 bis 236.4 stellt mindestens eine Kraftstoffart, vorzugsweise eine fluide Kraftstoffart, bereit.

Darüber hinaus umfasst die Tankstelle 234 mindestens eine optische Erfassungseinrichtung 240. Die optische Erfassungseinrichtung 240 umfasst mindestens eine Kamera 242, mindestens ein Bilddatenauswertemodul 244 und ein Sendemodul 246. Das Bilddatenauswertemodul 244 kann ein Bestandteil der Auswerteanordnung 202 sein. Es versteht sich, dass eine Mehrzahl von Kameras vorgesehen sein kann, um zumindest den gesamten Abstellbereich 233 der Tankstelle 234 abzudecken bzw. erfassen zu können. Insbesondere kann es sich bei den Kameras um bereits vorgesehene Überwachungskameras handeln.

Die Tankstelle 234 umfasst eine lokale Abrechnungseinrichtung 256 mit einem Abrechnungsmodul 258. Wie ferner zu erkennen ist, weist die dargestellte Tankstelle 234 mindestens eine Sendeeinrichtung 238 auf, beispielweise eine Bluetooth Low Energy Funkbake ("BLE Beacon"). Die Sendeeinrichtung 238 sendet Daten aus, die von mobilen Endgeräten 252 innerhalb des Sendefeldes empfangbar sind.

Die mindestens eine Sendeeinrichtung 238 ist der Tankstelle 234 systemweit eineindeutig zugeordnet. Insbesondere ist hierfür eine Kommunikationsverbindung zwischen der Sendeeinrichtung 238 und einer datentechnischen Einrichtung der Tankstelle 234 vorgesehen (beispielsweise über einen drahtgebundenen Kommunikationskanal 212). Ferner deckt das Sendefeld insbesondere zumindest den gesamten (nicht dargestellten) Zufahrtsbereich zu dem Parkbereich der Tankstelle und/oder den Abstellbereich 233 der Tankstelle ab 234. Über die Kommunikationsverbindung 212 können Daten zwischen der Sendeeinrichtung 238 und der Tankstelle 234 ausgetauscht werden. Beispielsweise können Zeitdaten für eine zeitliche Synchronisation der jeweiligen Zeitmittel und/oder eine Tankstellenkennung übertragen werden.

Die Sendeeinrichtung 238 sendet ihre Daten in einem Sendefeld mit einer definierten Sendereichweite (z.B. ca. 30 m). Die Daten können vorzugsweise (nahezu) kontinuierlich ausgesendet werden. Die Daten umfassen zumindest eine Aufwecknachricht mit Instruktion, eingerichtet zum Starten bzw. Aktivieren einer Tankanwendung 254 nach einem Empfang der Aufwecknachricht durch das mobile Endgerät 252. Neben diesen Instruktionen kann die Aufwecknachricht vorzugsweise die Tankstellenkennung der Tankstelle 234 umfassen, der die Sendeeinrichtung 238 zugeordnet ist. Es versteht sich, dass auch mehrere Nachrichten von einer oder mehreren Sendeeinrichtung/en gesendet werden können.

Die von der Sendeeinrichtung 238 nach dem BLE-Standard ausgesendeten Daten sind von nahezu jedem mobilen Endgerät 252, insbesondere mit einem marktüblichem Betriebssystem (z.B. Apple iOS, Google Android, Microsoft Windows Mobile, Microsoft Mobile Phone, Blackberry OS, Symbian OS, Firefox OS, Tizen, Aliyun OS), empfangbar.

Ferner sind vorliegend zwei Fahrzeuge 248.1, 248.2 beispielhaft in dem Abstellbereich 233 der Tankstelle 234 dargestellt, wobei jedes Fahrzeug 248.1, 248.2 über einen Tankstutzen 250.1, 250.2 bzw. eine Tanköffnung 250.1, 250.2 verfügt.

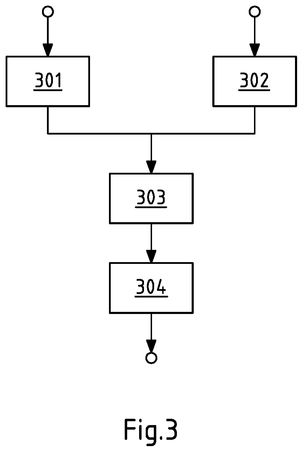

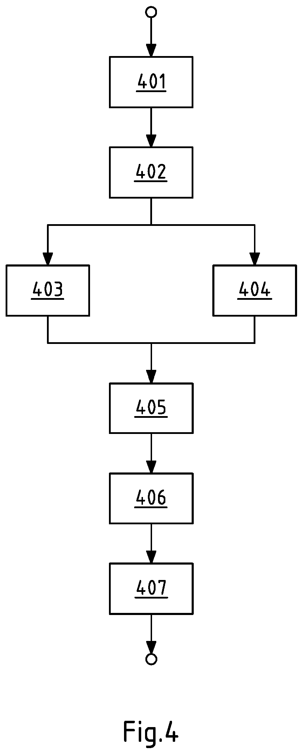

Zugunsten einer besseren Übersicht ist vorliegend nur ein mobiles Endgerät 252 eines (nicht dargestellten) Nutzers gezeigt. Das mobile Endgerät 252 sei nun dem Nutzer des ersten Fahrzeugs 248.1 zugeordnet. Die Funktionsweise des Tankstellensystems 200 und der Betrieb des Tankstellensystems 200 werden nachfolgend mit Hilfe der Figuren 3 und 4 näher erläutert.

Die Figur 3 zeigt ein Diagramm eines ersten Ausführungsbeispiels eines Verfahrens gemäß der vorliegenden Anmeldung. Wie bereits beschrieben, kann das Verfahren zum Betreiben eines zuvor beschriebenen Tankstellensystems verwendet werden.

In einem Schritt 301 empfängt die Auswerteanordnung von einem mobilen Endgerät über einen drahtlosen Kommunikationskanal eine Nutzerkennung eines Nutzers eines zu tankenden Fahrzeugs und mindestens eine Tankstellenkennung der Tankstelle, an dem das Fahrzeug betankt werden soll. Insbesondere empfängt die Auswerteanordnung von dem mobilen Endgerät einen ersten Datensatz, der diese Nutzerkennung und diese Tankstellenkennung miteinander verknüpft.

Darüber hinaus empfängt die Auswerteanordnung von einer optischen Erfassungseinrichtung der Tankstelle, insbesondere einem Sendemodul der optischen Erfassungseinrichtung, in Schritt 302 eine Fahrzeugkennungsinformation des von der optischen Erfassungseinrichtung in einem Abstellbereich erfassten Fahrzeugs und eine Positionsinformation des von der optischen Erfassungseinrichtung erfassten Fahrzeugs. Insbesondere empfängt die Auswerteanordnung von der optischen Erfassungseinrichtung einen zweiten Datensatz, der diese Fahrzeugkennungsinformation und diese Positionsinformation des Fahrzeugs miteinander verknüpft.

Die Schritte 301 und 302 können zumindest teilweise parallel und insbesondere in Echtzeit durchgeführt werden.

In einem nachfolgenden Schritt 303 wird ein Auswertevorgang von der Auswerteanordnung durchgeführt. In dem Auswertevorgang werden die ersten und zweiten Datensätze ausgewertet. Insbesondere wertet ein Auswertemodul die empfangene Nutzerkennung, die empfangene Tankstellenkennung, die empfangene Fahrzeugkennungsinformation und die empfangene Positionsinformation des Fahrzeugs derart aus, dass der von dem Nutzer des erfassten Fahrzeugs zu verwendende Zapfpunkt aus der Mehrzahl von Zapfpunkten der Tankstelle bestimmt wird. Wie oben beschrieben wurde, kann von einem Auswertemodul auf in einer Datenbank gespeicherte Nutzerdatensätze und/oder Tankstellendatensätze für eine Zuordnung der empfangenen Datensätze zueinander zugegriffen werden.

Die von den erfassten Fahrzeugen zu verwendenden Zapfpunkte aus der Mehrzahl von Zapfpunkten der Tankstelle sind damit bestimmt und sind jeweils einem Nutzer sicher und eindeutig zugeordnet; nachfolgende Tankvorgänge an den bestimmten Zapfpunkten können damit mit den jeweiligen Nutzern verrechnet werden.

Anschließend kann in Schritt 304 der bestimmte Zapfpunkt für einen Tankvorgang freigegeben werden. Beispielsweise kann ein Freigabemodul der Auswerteanordnung ein Freigabesignal aussenden, um eine Freigabe des bestimmten Zapfpunkts zu bewirken.

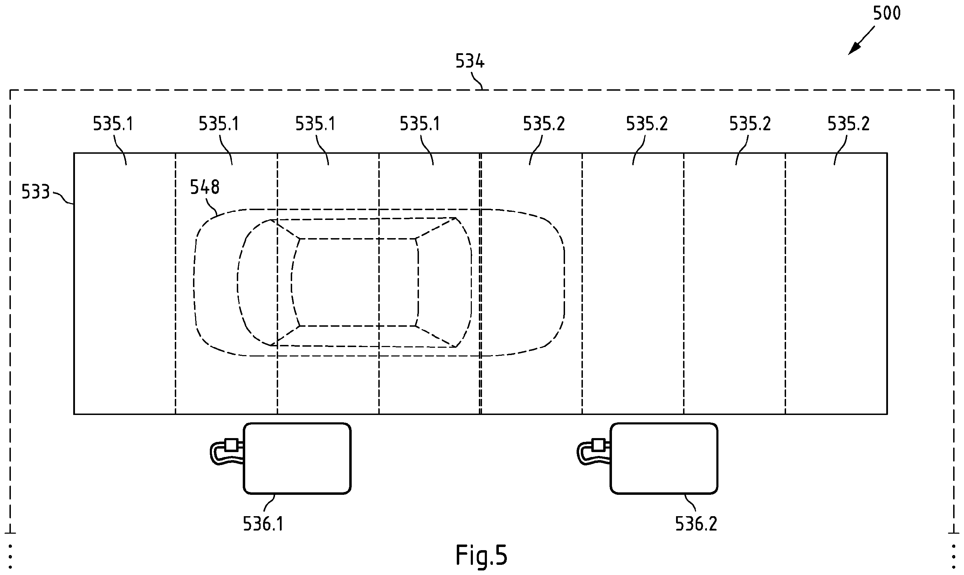

Die Figur 4 zeigt ein Diagramm eines weiteren Ausführungsbeispiels eines Verfahrens gemäß der vorliegenden Anmeldung. Mit dem dargestellten Verfahren kann insbesondere das beispielhafte Tankstellensystem 200 nach Figur 2 (und 500 nach Figur 5) betrieben werden. Nachfolgend wird mit Hilfe der Figuren 2, 4 und 5 der Betrieb des Tankstellensystems 200 beispielhaft beschrieben.

In Schritt 401 sendet mindestens eine Sendeeinrichtung 238, insbesondere ein Bluetooth-Beacon 238, kontinuierlich Daten aus. Wie bereits beschrieben, deckt das mindestens eine Sendefeld die Zufahrt zu dem Abstellbereich 233 (auch Forecourt genannt) und/oder den Abstellbereich 233 ab. Die Sendeeinrichtung 238 ist der Tankstelle 234 systemweit eineindeutig zugeordnet und sendet im vorliegenden Ausführungsbeispiel eine Aufwecknachricht, umfassend Instruktionen zum Aktivieren einer auf dem mobilen Endgerät 252 installierten Tankanwendung 254. Ferner umfasst die Aufwecknachricht vorliegend die Tankstellenkennung der Tankstelle 234, mit der die Sendeeinrichtung 238 verknüpft ist.

Gelangt ein Nutzer mit seinem mobilen Endgerät 252 in das Sendefeld der Sendeeinrichtung 238, bewirken die in der Aufwecknachricht enthaltenden Instruktionen eine Aktivierung bzw. Aufweckung der Tankanwendung 254. Die Tankanwendung 254 kann insbesondere ein Softwaremodul sein ("App"). Vorzugsweise kann die Aufwecknachricht (oder eine nachfolgende Nachricht) Instruktionen aufweisen, die die Tankanwendung 254 veranlassen, die von der Sendeeinrichtung 238 empfangene Tankstellenkennung und die in dem mobilen Endgerät 252 gespeicherte Nutzerkennung auszusenden. Insbesondere generiert die Tankanwendung 254 einen ersten Datensatz, umfassend diese Tankstellenkennung und diese Nutzerkennung, und bewirkt eine Aussendung des ersten Datensatzes an eine Auswerteanordnung 202.

Ferner werden insbesondere von dem Abstellbereich 233 der Tankstelle 234 durch die Kamera 242 der optischen Erfassungseinrichtung 240 (nahezu) kontinuierlich Bilddaten bzw. Bilddatensätze erzeugt (Schritt 402). Die erzeugten Bilddaten werden von dem Bilddatenauswertemodul 244 (nahezu) kontinuierlich ausgewertet (Schritt 402). Insbesondere werden durch die Auswertung der Bilddaten die Fahrzeugkennungen (Kennzeichen) der erfassten Fahrzeuge 248.1, 248.2 bestimmt, welche sich auf dem Abstellbereich 233 der Tankstelle 234 befinden.

Beispielsweise kann das Bilddatenauswertemodul 244 eingerichtet sein, nur dann die Fahrzeugkennung eines Fahrzeugs 248.1, 248.2 zu bestimmen, wenn dessen erfasste Geschwindigkeit 0 km/h beträgt. Mit anderen Worten ist ein Stillstand des Fahrzeugs 248.1, 248.2 erforderlich.

Neben der Fahrzeugkennung des erfassten Fahrzeugs 248.1, 248.2 kann die Halteposition bzw. die Positionsinformation des erfassten Fahrzeugs 248.1, 248.2 bestimmt werden. Dies kann insbesondere eine Bestimmung des Zapfpunktes 236.1 bis 236.4 (bzw. die Zapfpunktkennung des Zapfpunktes) umfassen, der von dem Fahrzeug 248.1, 248.2 für einen Tankvorgang (voraussichtlich) verwendet werden wird.

Um den korrekten Zapfpunkt zu erfassen, kann beispielsweise von dem Bilddatenauswertemodul 244 die Entfernung bzw. der Abstand eines erfassten Fahrzeugs 248.1, 248.2 zu der Mehrzahl von Zapfpunkten 236.1 bis 236.4 bestimmt werden. Insbesondere kann der Abstand zwischen einer Tanköffnungsposition 250.1, 250.2 und der Mehrzahl von Zapfpunkten 236.1 bis 236.4 (Mittelpunkt der Zapfsäule, Anschluss des Zapfschlauchs an der Zapfsäule etc.) bestimmt werden.

Alternativ oder zusätzlich kann ein Abstellbereich 233 in eine Mehrzahl von Subbereichen unterteilt werden. Dies ist beispielhaft in der Figur 5 dargestellt. Wie in Figur 5 zu erkennen ist, ist der Abstellbereich 533 einer Tankstelle 534, insbesondere die Bilddaten des Referenzbilddatensatzes des Abstellbereichs 533, in eine Mehrzahl von Subbereichen 535.1, 535.2 unterteilt. Hierbei sind vorliegend die Subbereiche 535.1 einem ersten Zapfpunkt 536.1 und die Subbereiche 535.2 einem zweiten Zapfpunkt 536.2 beispielhaft zugeordnet. Wie zuvor beschrieben, kann ein Subbereich auch zwei oder mehr Zapfpunkten durch das Vergeben von Zuordnungswahrscheinlichkeiten zugeordnet sein. Zudem kann eine Zuordnungswahrscheinlichkeit - wie zuvor beschrieben - von weiteren Daten (z.B. Lage des Tankstutzens, Orientierung des Fahrzeugs etc.) abhängen. Diese Zuordnungen können in einer Datenbank 232 gespeichert sein.

Für die Bestimmung des von einem erfassten Fahrzeugs 248.1, 248.2, 548 zu verwendenden Zapfpunktes kann die optische Erfassungseinrichtung zunächst das Bilddatenauswertemodul 244 verwenden. Das Bilddatenauswertemodul 244 verfügt dabei über Bildverarbeitungsmittel und bevorzugt über eine lokale Kopie der Tankstellendatensätze aus der Datenbank 232, welche die eigene Tankstelle 234, 534 betreffen. Insbesondere in einem Bildsubtraktionsverfahren zieht das Bildverarbeitungsmittel von dem Bilddatensatz der Kamera den Referenzdatensatz der Tankstelle 234, 534 ab. So kann die Position der erfassten Fahrzeugen 248.1, 248.2, 548 auf dem Abstellbereich 233, 533 der Tankstelle 234, 534 bestimmt werden.

Sodann werden vorzugsweise die von einem Fahrzeug 548 belegten Subbereiche 535.1, 535.2 bestimmt. In dem Ausführungsbeispiel nach Figur 5 sind beispielhaft von dem Fahrzeug 548 drei erste Subbereiche 535.1 und nur ein zweiter Subbereich 535.2 belegt. Mit anderen Worten ist die Anzahl der Subbereiche 535.1, die dem ersten Zapfpunkt 536.1 zugeordnet ist, drei, und die Anzahl der Subbereiche 535.2, die dem zweiten Zapfpunkt 536.2 zugeordnet ist, eins. In einem beispielhaften Auswertefall kann basierend auf der jeweiligen Anzahl an Subbereichen der zu verwendende Zapfpunkt, vorliegend der erste Zapfpunkt 536.1, bestimmt werden.

Ein Subbereich kann etwa 1m² groß sein. Wie bereits beschrieben wurde, kann alternativ (oder zusätzlich) zu dem vorherigen Auswertebeispiel ein Subbereich mehreren Zapfpunkten mit bestimmten Wahrscheinlichkeiten zugeordnet sein. Bei einem Fahrzeug, das gerade beispielsweise in acht Subbereichen steht, werden für alle Zapfpunkte über alle acht Subbereiche die Wahrscheinlichkeiten addiert, und der Zapfpunkt mit der größten (Gesamt-)Wahrscheinlichkeit wird bestimmt als derjenige Zapfpunkt, an dem das Fahrzeug voraussichtlich tanken wird.

Zusätzlich kann die optische Erfassungseinrichtung anhand der ermittelten Fahrzeugkennungen in der Datenbank 232 hinterlegte weitere Fahrzeugdaten abfragen, wie z.B. Lage des Tankstutzens, verwendbare Kraftstoffe etc., und diese Daten zu einer nochmals verbesserten Bestimmung des Zapfpunkts 236.1 bis 236.4, 536.1, 536.2 verwenden, an dem ein erfasstes Fahrzeug 248.1, 248.2, 548 voraussichtlich tanken wird.

Die zuvor genannten Informationen können zumindest teilweise aus den bereitgestellten Bilddaten abgeleitet werden. Auch können andere Datenquellen herangezogen werden, wie eine Information über einen nicht verfügbaren Zapfpunkt 236.1 bis 236.4, 536.1, 536.2 von der Auswerteanordnung 202 oder von einer Steuervorrichtung der Tankstelle 234.

Es versteht sich, dass die Funktionalität des Bilddatenauswertemoduls 244 zumindest teilweise (auch) in der Auswerteanordnung 202 implementiert sein kann. In diesem Fall empfängt die Auswerteanordnung 202 unverarbeitete zweite Datensätze von der optischen Erfassungseinrichtung 240.

Das Sendemodul 246 der optischen Erfassungseinrichtung 240 ist insbesondere eingerichtet, die erfassten Fahrzeugkennungen und die Positionsinformationen, vorzugsweise umfassend die Zapfpunktkennungen, über den Kommunikationskanal 212 auszusenden. Insbesondere generiert die optische Erfassungseinrichtung 240 einen verarbeiteten zweiten Datensatz, umfassend diese Fahrzeugkennungen und diese Positionsinformationen. Hierdurch können Fahrzeugkennungen und Positionsinformationen miteinander verknüpft werden.

Die Schritte 401 und 402 können zumindest teilweise parallel durchgeführt werden; insbesondere werden sie in Echtzeit durchgeführt.

Wie bereits beschrieben, empfängt in Schritt 403 (siehe Schritt 301) die Auswerteanordnung 202 den ersten Datensatz, der die Nutzerkennung und die Tankstellenkennung miteinander verknüpft, von dem mobilen Endgerät 252. Zudem empfängt in Schritt 404 (siehe Schritt 302) die Auswerteanordnung 202 von der optischen Erfassungseinrichtung 240 den verarbeiteten zweiten Datensatz, der die erfasste Fahrzeugkennung und die Positionsinformation miteinander verknüpft. Dann kann entsprechend den Schritten 303 und 304 eine Auswertung (Schritt 405) und Freigabe (Schritt 406) erfolgen. Hierbei kann in dem Auswertevorgang ferner überprüft werden, ob die Nutzerkennung eine zulässige Nutzerkennung ist. Wenn detektiert wird, dass die empfangene Nutzerkennung nicht registriert ist oder gesperrt ist, erfolgt keine Freigabe eines Zapfpunktes 236.1 bis 236.4, 536.1, 536.2. Eine entsprechende Überprüfung kann für die Fahrzeugkennungen durchgeführt werden.

Nach einer Freigabe kann der Tankvorgang in herkömmlicher Weise durchgeführt werden. Im Anschluss an den Tankvorgang wird dieser in einem Abrechnungsschritt 407 abgerechnet. Die abgegebene Kraftstoffmenge und der Preis werden an die Auswerteanordnung 202 übertragen und abgerechnet unter Berücksichtigung der in der Datenbank 232 gespeicherten Nutzerdaten (Kontodaten, Kreditkartendaten etc.). Diese zentrale Abrechnung (in der Auswerteanordnung) wird über eine Datennachricht an die lokale Abrechnungseinrichtung 256 der Tankstelle 234 mitgeteilt, um beispielsweise einen Kassierer darüber zu informieren, dass ein Tankvorgang, bei dem der Kunde nicht an der Kasse bezahlt hat, dennoch regulär verrechnet wurde.

Alternativ kann die Nutzerkennung und die von dem Nutzer verwendete Zapfpunktkennung an die lokale Abrechnungseinrichtung 256 der Tankstelle 234 übertragen werden. Dann kann das Abrechnungsmodul 258 eine lokale Abrechnung des Tankvorgangs durchführen.

Es versteht sich, dass bei dem zuvor beschriebenen Verfahren es ggf. erforderlich sein kann, dass ein Nutzer beispielsweise mit Hilfe seines mobilen Endgeräts zur Durchführung einer Bestätigungsaktion aufgefordert wird. Beispielsweise für die Freigabe eines Zahlvorgangs, das Aussenden einer Nachricht an die Auswertevorrichtung und/oder die Bestätigung eines zu verwendenden Zapfpunkts vor einer tatsächlichen Freigabe des Zapfpunktes. Dennoch ist auch in diesem Fall die manuelle Interaktion auf ein Minimum beschränkt, so dass die Nutzerfreundlichkeit und die Fehleranfälligkeit verbessert werden.

## Patentansprüche

1. Verfahren zum Betreiben eines Tankstellensystems (100, 200, 500) mit mindestens einer Tankstelle (234, 534), wobei die Tankstelle (234, 534) eine Mehrzahl von Zapfpunkten (236.1, 236.2, 236.3, 236.4, 536.1, 536.2) aufweist, umfassend:
- Empfangen, durch eine Auswerteanordnung (102, 202), von einem mobilen Endgerät (252) des Nutzers, mindestens eines ersten Datensatzes (116), der zumindest eine Nutzerkennung (118) des Nutzers des mobilen Endgeräts (252) und mindestens eine Tankstellenkennung (120) der Tankstelle (234, 534) umfasst,
- Empfangen, durch die Auswerteanordnung (102, 202), von einer optischen Erfassungseinrichtung (240) der Tankstelle (234, 534), mindestens eines zweiten Datensatzes (122), der mindestens eine Positionsinformation (126) eines in mindestens einem Abstellbereich (233, 533) der Tankstelle (234, 534) durch die optische Erfassungseinrichtung (240) erfassten Fahrzeugs (248.1, 248.2, 548) und mindestens eine Fahrzeugkennungsinformation (124) des durch die optische Erfassungseinrichtung (240) erfassten Fahrzeugs (248.1, 248.2, 548) umfasst, und
- Auswerten, durch die Auswerteanordnung (102, 202), in einem Auswertevorgang, des empfangenen ersten Datensatzes (116) und des empfangenen zweiten Datensatzes (122) derart, dass der von dem Nutzer des erfassten Fahrzeugs (248.1, 248.2, 548) zu verwendende Zapfpunkt (236.1, 236.2, 236.3, 236.4, 536.1, 536.2) aus der Mehrzahl von Zapfpunkten (236.1, 236.2, 236.3, 236.4, 536.1, 536.2) der Tankstelle (234, 534) bestimmt wird.

2. Verfahren nach Anspruch 1, **dadurch gekennzeichnet, dass** das Verfahren ein Bestimmen der Positionsinformation (126) des erfassten Fahrzeugs (248.1, 248.2, 548) durch ein Vergleichen eines von der optischen Erfassungseinrichtung (240) generierten Bilddatensatzes des Abstellbereichs (233, 533) und eines Referenzbilddatensatzes des Abstellbereichs (233, 533) umfasst.

3. Verfahren nach Anspruch 2, **dadurch gekennzeichnet, dass**
- in dem Referenzbilddatensatz des Abstellbereichs (233, 533) der Abstellbereich (233, 533) in eine Mehrzahl von Subbereichen (535.1, 535.2) unterteilt ist,
- jeder Subbereich (535.1, 535.2) einem Zapfpunkt (236.1, 236.2, 236.3, 236.4, 536.1, 536.2) aus der Mehrzahl von Zapfpunkten (236.1, 236.2, 236.3, 236.4, 536.1, 536.2) zugeordnet ist,
- das Vergleichen des von der optischen Erfassungseinrichtung (240) generierten Bilddatensatzes des Abstellbereichs (233, 533) und des Referenzbilddatensatzes des Abstellbereichs (233, 533) ein Bestimmen der von dem erfassten Fahrzeug (248.1, 248.2, 548) belegten Subbereiche (535.1, 535.2) umfasst, und
- das Bestimmen der Positionsinformation (126) des erfassten Fahrzeugs (248.1, 248.2, 548) abhängig von der Zuordnung der belegten Subbereiche (535.1, 535.2) zu den Zapfpunkten (236.1, 236.2, 236.3, 236.4, 536.1, 536.2) durchgeführt wird.

4. Verfahren nach einem der vorherigen Ansprüche, **dadurch gekennzeichnet, dass** das Bestimmen der Positionsinformation (126) zumindest auf einem der folgenden Daten basiert:
- verfügbare Zapfpunkte (236.1, 236.2, 236.3, 236.4, 536.1, 536.2) an der Tankstelle (234, 534),
- Lage des Tankstutzens (250.1, 250.2) des erfassten Fahrzeugs (248.1, 248.2, 548),
- Orientierung des erfassten Fahrzeugs (248.1, 248.2, 548) auf dem Abstellbereich (233, 533) der Tankstelle (234, 534),
- zulässige Kraftstoffe für das erfasste Fahrzeug (248.1, 248.2, 548) und den von der Mehrzahl von Zapfpunkten (236.1, 236.2, 236.3, 236.4, 536.1, 536.2) bereitgestellten Kraftstoffe, und
- Entfernung zwischen dem erfassten Fahrzeug (248.1, 248.2, 548), insbesondere der Lage des Tankstutzens (250.1, 250.2) des erfassten Fahrzeugs (248.1, 248.2, 548), und den Zapfpunkten (236.1, 236.2, 236.3, 236.4, 536.1, 536.2).

5. Verfahren nach einem der vorherigen Ansprüche, **dadurch gekennzeichnet, dass**
- das Bestimmen des von dem Nutzer des erfassten Fahrzeugs (248.1, 248.2, 548) zu verwendenden Zapfpunkts (236.1, 236.2, 236.3, 236.4, 536.1, 536.2) ein Zuordnen eines empfangenen ersten Datensatzes (116) zu einem empfangenen zweiten Datensatz (122) basierend auf in einer Datenbank (232) gespeicherten Verknüpfungen von Nutzerkennungen zu Fahrzeugkennungsinformationen umfasst,
und/oder
- der zweite Datensatz (122) eine Tankstellenkennung der Tankstelle (234, 534) umfasst, und
- das Bestimmen des von dem Nutzer des erfassten Fahrzeugs (248.1, 248.2, 548) zu verwendenden Zapfpunkts (236.1, 236.2, 236.3, 236.4, 536.1, 536.2) ein Zuordnen eines empfangenen ersten Datensatzes (116) zu einem empfangenen zweiten Datensatz (122) basierend auf der Tankstellenkennung des ersten Datensatzes (116) und der Tankstellenkennung des zweiten Datensatzes (122) umfasst.

6. Verfahren nach Anspruch 1 oder 2, **dadurch gekennzeichnet, dass** der Tankstelle (234, 534) mindestens eine Sendeeinrichtung (238) zugeordnet ist, und das Verfahren umfasst:
- Senden, durch die Sendeeinrichtung (238), mindestens einer Aufweck-Nachricht,
- Empfangen, durch das mobile Endgerät (252), mindestens einer der Aufwecknachrichten derart, dass mindestens eine Aktivierung einer auf dem mobilen Endgerät (252) installierten Tankanwendung bewirkt wird, und
- Empfangen des ersten Datensatzes (116), dessen Aussendung durch die aktivierte Tankanwendung (254) des mobilen Endgeräts (252) bewirkt wurde.

7. Tankstellensystem (100, 200, 500), umfassend:
- mindestens eine Tankstelle (234, 534) mit einer Mehrzahl von Zapfpunkten (236.1, 236.2, 236.3, 236.4, 536.1, 536.2), und
- mindestens eine Auswerteanordnung (102, 202),
- wobei die Auswerteanordnung (102, 202) mindestens ein Empfangsmodul (104, 204) umfasst, das eingerichtet ist zum Empfangen mindestens eines ersten Datensatzes (116), der zumindest eine Nutzerkennung (118) des Nutzers des mobilen Endgeräts (252) und mindestens eine Tankstellenkennung (120) der Tankstelle (234, 534) umfasst,
- wobei das Empfangsmodul (104, 204) zum Empfangen, von einer optischen Erfassungseinrichtung (240) der Tankstelle (234, 534), mindestens eines zweiten Datensatzes (122) eingerichtet ist, der mindestens eine Positionsinformation (126) eines in mindestens einem Abstellbereich (233, 533) der Tankstelle (234, 534) durch die optische Erfassungseinrichtung (240) erfassten Fahrzeugs (248.1, 248.2, 548) und mindestens eine Fahrzeugkennungsinformation (124) des durch die optische Erfassungseinrichtung (240) erfassten Fahrzeugs (248.1, 248.2, 548) umfasst, und
- wobei die Auswerteanordnung (102, 202) mindestens ein Auswertemodul (106, 206) umfasst, das eingerichtet ist zum Auswerten, in einem Auswertevorgang, des empfangenen ersten Datensatzes (116) und des empfangenen zweiten Datensatzes (122) derart, dass der von dem Nutzer des erfassten Fahrzeugs (248.1, 248.2, 548) zu verwendende Zapfpunkt (236.1, 236.2, 236.3, 236.4, 536.1, 536.2) aus der Mehrzahl von Zapfpunkten (236.1, 236.2, 236.3, 236.4, 536.1, 536.2) der Tankstelle (234, 534) bestimmt wird.

8. Tankstellensystem (100, 200, 500) nach Anspruch 7, **dadurch gekennzeichnet, dass**
- die Auswerteanordnung (102, 202) zumindest teilweise in der Tankstelle (234, 534) angeordnet ist,
und/oder
- die Auswerteanordnung (102, 202) zumindest teilweise entfernt von der Tankstelle (234, 534) angeordnet ist.

9. Auswerteanordnung (102, 202) eines Tankstellensystems (100, 200, 500), insbesondere eines Tankstellensystems (100, 200, 500) nach Anspruch 7 oder 8, umfassend:
- mindestens ein Empfangsmodul (104, 204), das eingerichtet ist zum Empfangen mindestens eines ersten Datensatzes (116), der zumindest eine Nutzerkennung (118) des Nutzers des mobilen Endgeräts (252) und mindestens eine Tankstellenkennung (120) der Tankstelle (234, 534) umfasst,
- wobei das Empfangsmodul (104, 204) zum Empfangen, von einer optischen Erfassungseinrichtung (240) der Tankstelle (234, 534), mindestens eines zweiten Datensatzes (122) eingerichtet ist, der mindestens eine Positionsinformation (126) eines in mindestens einem Abstellbereich (233, 533) der Tankstelle (234, 534) durch die optische Erfassungseinrichtung (240) erfassten Fahrzeugs (248.1, 248.2, 548) und mindestens eine Fahrzeugkennungsinformation (124) des durch die optische Erfassungseinrichtung (240) erfassten Fahrzeugs (248.1, 248.2, 548) umfasst, und
- mindestens ein Auswertemodul (106, 206), das eingerichtet ist zum Auswerten, in einem Auswertevorgang, des empfangenen ersten Datensatzes (116) und des empfangenen zweiten Datensatzes (122) derart, dass der von dem Nutzer des erfassten Fahrzeugs (248.1, 248.2, 548) zu verwendende Zapfpunkt (236.1, 236.2, 236.3, 236.4, 536.1, 536.2) aus der Mehrzahl von Zapfpunkten (236.1, 236.2, 236.3, 236.4, 536.1, 536.2) der Tankstelle (234, 534) bestimmt wird.
